# EUROPEAN PATENT APPLICATION

(11) **EP 3 567 908 A1**
(43) Date of publication of application: **13.11.2019**
(21) Application number: 18736513.5
(22) Date of filing: 05.01.2018
(51) Int. Cl.: H04W 28/04, H04W 28/06

(54) **USER TERMINAL AND WIRELESS COMMUNICATION METHOD**

(30) Priority: 06.01.2017 JP 2017001441
(71) Applicant: NTT DOCOMO, INC., Chiyoda-ku Tokyo 100-6150 (JP)
(72) Inventor: TAKEDA, Kazuki, Tokyo 100-6150 (JP); YASUKAWA, Shinpei, Tokyo 100-6150 (JP); NAGATA, Satoshi, Tokyo 100-6150 (JP); ZHAO, Qun, Beijing 100190 (CN); HOU, Xiaolin, Beijing 100190 (CN); JIANG, Huiling, Beijing 100190 (CN)
(74) Representative: Hoffmann Eitle
(86) International application number: PCT/JP2018/000052
(87) International publication number: WO 2018/128182

(57) **Abstract**

The present invention is designed to reduce the deterioration of communication performance in long TTIs even when short TTIs interrupt long TTIs. According to the present invention, a user terminal has a receiving section that receives downlink (DL) data in a first transmission time interval (TTI), and a control section that, when part of the DL data is punctured by transmission in a second TTI, which is shorter than the first TTI, controls recovery of the DL data based on retransmission data transmitted from a radio base station, without feedback information for acknowledging delivery of the DL data.

## Description

### Technical Field

The present invention relates to a user terminal and a radio communication method in next-generation mobile communication systems.

### Background Art

In the UMTS (Universal Mobile Telecommunications System) network, the specifications of long-term evolution (LTE) have been drafted for the purpose of further increasing high speed data rates, providing lower latency and so on (see non-patent literature 1). In addition, successor systems of LTE are also under study for the purpose of achieving further broadbandization and increased speed beyond LTE (referred to as, for example, "LTE-A (LTE-Advanced)," "FRA (Future Radio Access)," "4G," "5G," "5G+ (plus)," "NR (New RAT)," "LTE Rel. 14," "LTE Rel. 15 (or later versions)," and so on).

In existing LTE systems (for example, LTE Rel. 10 and later versions), carrier aggregation (CA) to integrate multiple carriers (component carriers (CCs), cells, etc.) is introduced in order to achieve broadbandization. Each carrier is configured with the system bandwidth of LTE Rel. 8 as one unit. In addition, in CA, multiple CCs under the same radio base station (eNB: eNodeB) are configured in a user terminal (UE: User Equipment).

Meanwhile, in existing LTE systems (for example, LTE Rel. 12 and later versions), dual connectivity (DC), in which multiple cell groups (CGs) formed by different radio base stations are configured in a user terminal, is also introduced. Each cell group is comprised of at least one cell (CC, cell, etc.). In DC, since multiple CCs of different radio base stations are integrated, DC is also referred to as "inter-eNB CA."

In existing LTE systems (for example, LTE Rels. 8 to 13), downlink (DL) and/or uplink (UL) communication are carried out using 1-ms transmission time intervals (TTIs). This 1-ms TTI is the unit of time to transmit one channel-encoded data packet, and is the processing unit in scheduling, link adaptation and so on. A TTI of 1 ms is also referred to as a "subframe," a "subframe duration" and/or the like.

### Citation List

### Non-Patent Literature

Non-Patent Literature 1: 3GPP TS36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

### Summary of Invention

### Technical Problem

Future radio communication systems (for example, 5G, NR, etc.) presume use cases characterized by, for example, high speed and large capacity (for example, eMBB (enhanced Mobile Broad Band)), a very large number of terminals (for example, massive MTC (Machine Type Communication)), ultra-high reliability and low latency (for example, ultra reliable and low-latency communications), and so on. For example, URLLC requires better latency reduction than in eMBB and/or higher reliability than in eMBB.

Thus, given that there is a possibility that a plurality of services having different requirements for latency reduction and/or reliability will be co-present in future radio communication systems, research is progress to support multiple TTIs of different time durations (for example, a TTI having a relatively long time duration (hereinafter referred to as a "long TTI," which is, for example, a TTI for eMBB), a TTI having a relatively short time duration (hereinafter referred to as a "short TTI," which is, for example, a TTI for URLLC), and so on).

In this way, when a long TTI and a short TTI are supported, it might occur that a short TTI is scheduled after transmission is started in a long TTI (that is, a short TTI interrupts a long TTI) so as to meet the demand for latency reduction and/or reliability. However, if a short TTI interrupts a long TTI, the performance of communication (for example, the performance of eMBB) in the long TTI may be deteriorated.

The present invention has been made in view of the above, and it is therefore an object of the present invention to provide a user terminal and a radio communication method that can reduce the deterioration of communication performance in long TTIs even when short TTIs interrupt the long TTIs.

### Solution to Problem

According to one aspect of the present invention, a user terminal has a receiving section that receives downlink (DL) data in a first transmission time interval (TTI), and a control section that, when part of the DL data is punctured by transmission in a second TTI, which is shorter than the first TTI, controls recovery of the DL data based on retransmission data transmitted from a radio base station, without feedback information for acknowledging delivery of the DL data.

### Advantageous Effects of Invention

According to the present invention, the deterioration of communication performance in long TTIs can be reduced even when short TTIs interrupt within the long TTIs.

### Brief Description of Drawings

FIG. 1 is a diagram to show an example of the impact of puncturing on transmission data in a long TTI;
FIG. 2 is a diagram to show an example of non-adaptive retransmission in the first retransmission control according to a first aspect of the present invention;
FIG. 3 is a diagram to show another example of non-adaptive retransmission in the first retransmission control according to the first aspect;
FIG. 4 is a diagram to show an example of adaptive retransmission in the first retransmission control according to the first aspect;
FIG. 5 is a diagram to show an example of adaptive retransmission in second retransmission control according to the first aspect;
FIG. 6 is a diagram to show an example of non-adaptive retransmission in second retransmission control according to the first aspect;
FIG. 7 is a diagram to show an example of non-adaptive retransmission in third retransmission control according to the first aspect;
FIG. 8 is a diagram to show an example of adaptive retransmission in third retransmission control according to the first aspect;
FIG. 9 is a diagram to show another example of non-adaptive retransmission in third retransmission control according to the first aspect;
FIG. 10 is a diagram to show an example of reporting the timing for transmitting retransmission data, according to a second aspect of the present invention;
FIG. 11 is a diagram to show an example of a report that is common to a plurality of user terminals, according to the second aspect;
FIG. 12 is a diagram to show example of reports that are specific to a plurality of user terminals, according to the second aspect;
FIG. 13 is a diagram to show a first example of retransmission control by a user terminal, according to a third aspect of the present invention;
FIG. 14 is another diagram to show the first example of retransmission control by a user terminal, according to the third aspect;
FIG. 15 is a diagram to show a second example of retransmission control by a user terminal, according to the third aspect;
FIG. 16 is a diagram to show an example of a schematic structure of a radio communication system according to the present embodiment;
FIG. 17 is a diagram to show an example of an overall structure of a radio base station according to the present embodiment;
FIG. 18 is a diagram to show an example of a functional structure of a radio base station according to the present embodiment;
FIG. 19 is a diagram to show an example of an overall structure of a user terminal according to the present embodiment;
FIG. 20 is a diagram to show an example of a functional structure of a user terminal according to the present embodiment; and
FIG. 21 is a diagram to show an example hardware structure of a radio base station and a user terminal according to the present embodiment.

### Description of Embodiments

In future radio communication systems (for example, 5G, NR, etc.), there is a possibility that services that require high speeds and large capacity (for example, eMBB) and services that require ultra-high reliability and low latency (for example, URLLCC) will be supported.

For services like URLLC that require ultra-high reliability and low latency, short TTIs, which are TTIs having a relatively short time duration, are suitable. This is so because short TTIs support high reliability (that is, retransmission in a short time) by providing short end-to-end latency (for example, frame fragmentation latency, transmission (Tx) latency, and so on) and/or short round-trip time.

On the other hand, for services like eMBB that require high-speeds and large capacity, long TTIs, which are TTIs having a relatively long time duration, are suitable. This is so because there is little control signal-induced overhead in long TTIs.

Therefore, a study is in progress to support long TTIs and short TTIs of varying time durations at the same time (in the same carrier (cell, component carrier (CC), etc.) in future radio communication systems. A long TTI may be constituted, for example, by fourteen symbols, at a subcarrier spacing of 15 kHz, using a normal cyclic prefix (NCP). A long TTI may be referred to as a "normal TTI," a "subframe," and so on.

Also, a short TTI may be formed with a smaller number of symbols than a long TTI, at the same subcarrier spacing as the long TTI (for example, one or two symbols at a subcarrier spacing of 15 kHz, using NCP). Alternatively, a short TTI may be formed with the same or a different number of symbols than a long TTI, at a higher (wider) subcarrier spacing as than the long TTI (for example, fourteen symbols at a subcarrier spacing of 60 kHz, using NCP). Alternatively, a short TTI may be realized by combining both of these.

When a long TTI and a short TTI are supported, it might occur that a short TTI is scheduled after transmission is started in a long TTI so as to meet the demand for latency reduction and/or reliability. To be more specific, there is a possibility that the transmission in the long TTI will be punctured by the transmission in the short TTI. In this case, the transmission in the short TTI punctures the transmission in the long TTI, and the communication performance in the long TTI (for example, the performance of eMBB) may be deteriorated.

Now, in existing LTE systems (for example, LTE Rel. 13 or earlier versions), code block segmentation, which divides a transport block (TB), which is the unit for scheduling DL data, into one or more code blocks (CB), and encodes each CB independently, is adopted. The encoded bits of each CB are coupled, modulated and mapped to available radio resources (for example, resource elements (REs)), first in the frequency direction and then in the time direction ("frequency-first time-second"). The maximum number of encoded bits of each CB is limited (for example, 6144 bits).

When this code block segmentation is applied to transmission data in a long TTI, the impact of puncturing caused by transmission in a short TTI upon the transmission in the long TTI may be limited to some CBs.

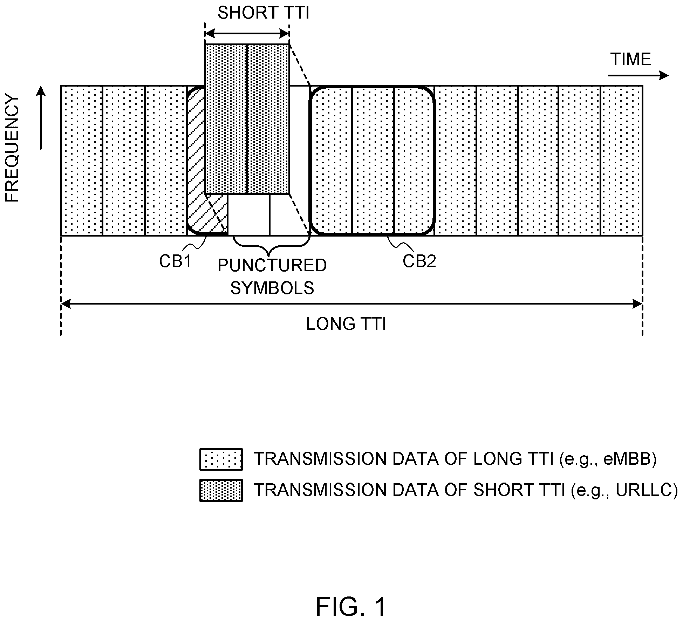

FIG. 1 is a diagram to show an example of the impact of puncturing on transmission in a long TTI. Assume that, in FIG. 1, the transmission data (TB) of the long TTI is divided into a plurality of CBs. For example, CB 1 and CB 2 shown in FIG. 1 are each allocated to three symbols in the long TTI. Also, in FIG. 1, two symbols out of the three symbols allocated to CB 1 are punctured by transmission in a short TTI.

In FIG. 1, many of the REs assigned to CB 1 are punctured by transmission in the short TTI, so that there is a high likelihood that a user terminal will fail to decode CB 1. On the other hand, the REs that are assigned to CB 2 are not punctured by the transmission of the short TTI, so the impact of puncturing on CB 2 is insignificant. For example, if a transmission bandwidth of 20 MHz, a subcarrier spacing of 15 kHz, a CB size of 6144 bits, 16 QAM and a coding rate of 1/2 are applied to the transmission in the long TTI, only 2.56 symbols are occupied per CB. In this case one CB or two CBs are affected by the transmission of the short TTI of two symbols.

Therefore, the present inventors have focused on the point that the impact of puncturing, caused by transmission in a short TTI, on transmission in a long TTI is limited to part of the CBs, and come up with the idea of reducing the deterioration of communication performance in long TTIs by retransmitting these CBs without feedback information from a user terminal.

Now, embodiments of the present invention will be described below in detail with reference to the accompanying drawings. Note that, although the case where code block segmentation is applied to DL data in long TTIs will be primarily described in the following description, the present embodiment can be applied regardless of whether code block segmentation is used, if part of the DL data is punctured.

Also, in the present embodiment, a short TTI (second TTI) can be configured in any way as long as its time duration is shorter than a long TTI (first TTI). Although an example will be described below in which a short TTI is comprised of fewer symbols than a long TTI, and in which each symbol has the same symbol duration as in a long TTI this example can be appropriately applied even when the short TTI has a different symbol duration from that of a long TTI.

Also, the user terminal of the present embodiment, may be a user terminal that can use long TTIs and short TTIs, or may be a user terminal that can only use either long TTIs or short TTIs. Furthermore, according to the present embodiment, the transmission power in long TTIs and the transmission power in short TTIs may be controlled separately or may be controlled together.

Also, with the present embodiment, a "TTI" -- a long TTI, a short TTI and/or others -- has only to be a predetermined period of time that serves as a scheduling unit, and may be replaced by a "subframe," a "slot," a "minislot," a "subslot" and so on. Note that, although FIG. 1 illustrates a case where a short TTI is configured based on the same subcarrier spacing as that of a long TTI and with fewer symbols than a long TTI, as mentioned earlier, a short TTI may be formed using a different subcarrier spacing. The same applies to the drawings that will be described later.

### (First Aspect)

In accordance with a first aspect of the present invention, a case will be described below in which, when DL data is comprised of TBs that are segmented into multiple CBs or TBs that are each formed with one CB, a radio base station retransmits DL data without delivery-acknowledging feedback information from a user terminal.

In the first aspect, when at least part of the radio resources allocated to a plurality of CBs constituting DL data in a long TTI (first TTI) are allocated to a short TTI (second TTI), the radio base station transmits retransmission data, without feedback information (for example, also referred to as "HARQ-ACK," "ACK/NACK," "A/N," and so on) that acknowledges the delivery of DL data.

To be more specific, if the conditions for retransmission (criteria) are met, the radio base station will transmit retransmission data even if feedback information does not arrive from the user terminal. Here, the conditions for retransmission may include, for example, that the proportion of the number of punctured REs with respect to the number of REs allocated to all CBs exceeds a predetermined threshold (retransmission condition 1), or that the coding rate, which does not take into account the punctured REs, exceeds a predetermined threshold (retransmission condition 2).

Also, the data to be retransmitted may be all of the encoded CBs, or may be only the encoded bits mapped to the punctured radio resources (for example, REs).

Also, the radio resources and/or transmission parameters to use for the retransmission may be non-adaptive (non-adaptive retransmission) or adaptive (adaptive retransmission). Here, the radio resources may be at least one of time resources (for example, symbols), frequency resources (for example, physical resource blocks (PRBs) and/or the like.), code resources, and space resources. Also, the transmission parameters may be at least one of the modulation scheme, the coding rate, the subcarrier spacing, and/or the like, for example.

In non-adaptive retransmission, the transmission parameters to use for retransmission are the same as those used in the initial transmission. Also, the radio resources to use for retransmission may be the same radio resources as those used in the initial transmission, and/or may be radio resources that are obtained by applying a predetermined offset to the radio resources of the initial transmission. This predetermined offset may be defined in a fixed manner, or may be configured semi-statically by higher layer signaling. Also, the predetermined offset may be cell-specific (common to user terminals in a cell) or user terminal-specific (UE-specific).

On the other hand, in adaptive retransmissions, the radio resources and transmission parameters that are used for retransmission may be different from those used in the initial transmission, and the retransmission data is scheduled independently of the initial transmission. Therefore, it is necessary to report scheduling information for the retransmission data to the user terminal.

### <First Retransmission Control>

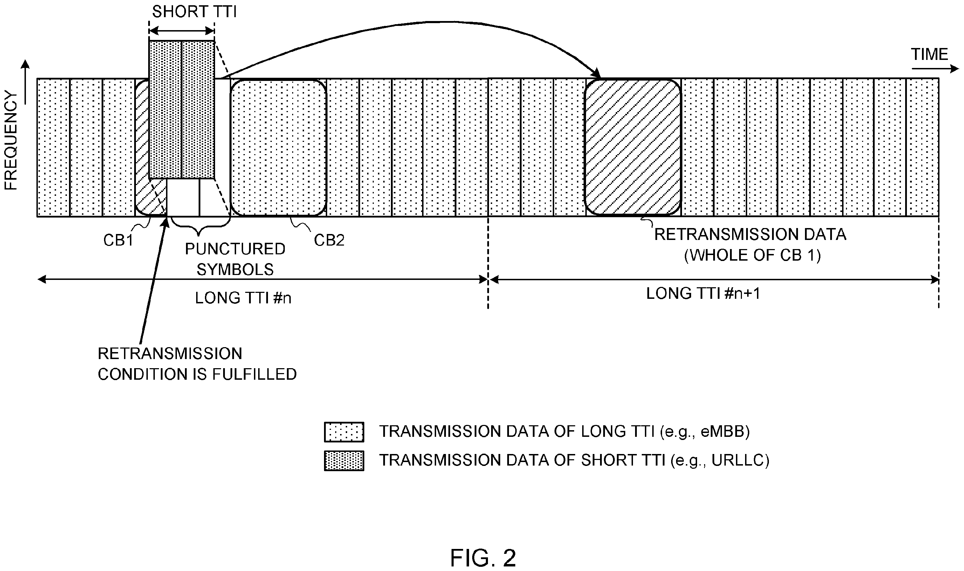

An example of first retransmission control in the radio base station will be described in detail with reference to FIG. 2 to FIG. 4. In FIG. 2 to FIG. 4, assume that DL data for a user terminal in a long TTI is constituted by a TB including CB 1 and CB 2, and three symbols are allocated to each of CB 1 and CB 2. Also assume that two symbols out of the three symbols allocated to CB 1 in long TTI #n are punctured by transmission data for a short TTI (for example, URLLC).

FIG. 2 is a diagram to show an example of non-adaptive retransmission in the first retransmission control. As shown in FIG. 2, when a part of CB 1 (here, two symbols of encoded bits) is punctured by the transmission data of a short TTI in long TTI #n, the radio base station determines whether or not to perform retransmission without feedback information from the user terminal, based on the retransmission conditions noted above. Note that, in FIG. 2, the condition for retransmission for CB 1 is fulfilled.

As shown in FIG. 2, in the event a part of CB 1 is punctured in long TTI #n, the radio base station may retransmit the whole of CB 1.

As shown in FIG. 2, when the whole of CB 1 is retransmitted in non-adaptive retransmission, the radio base station may allocate radio resources obtained by applying a predetermined offset to the radio resources used in the initial transmission of CB 1, to the retransmission of the whole of CB 1. For example, in FIG. 2, a time duration to match one long TTI is configured as the predetermined offset. Therefore, when CB 1 is transmitted for the first time in the fourth to sixth symbols in long TTI #n, the whole of CB 1 is retransmitted in the fourth to sixth symbols in long TTI #n+1.

Thus, in FIG. 2, the whole of CB 1 is retransmitted, so that the user terminal can easily restore the TB including CB 1 and CB 2 by using CB 2 received in long TTI #n and CB 1 retransmitted in long TTI #n+1. Furthermore, in FIG. 2, non-adaptive retransmission is used, so that it is possible to reduce the burden of scheduling in the radio base station.

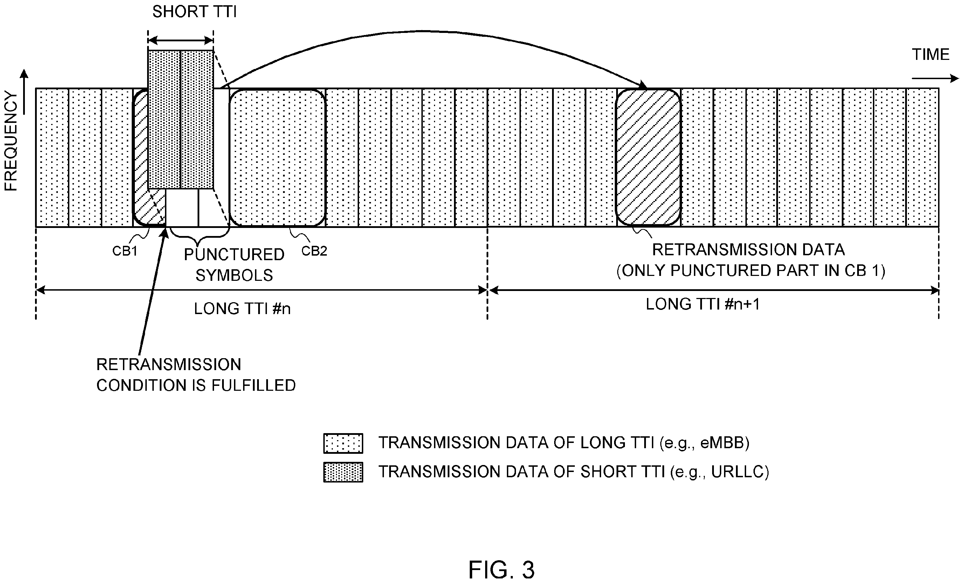

FIG. 3 is a diagram to show another example of non-adaptive retransmission in the first retransmission control. In FIG. 3, as in FIG. 2, part of CB 1 is punctured in long TTI #n. FIG. 3 is different from FIG. 3 in that the radio base station retransmits only the encoded bits mapped to the punctured radio resources (here, two symbols), instead of retransmitting the whole of CB 1.

As shown in FIG. 3, when the radio base station retransmits only those encoded bits that are punctured, in non-adaptive retransmission, the radio base station may allocate the radio resources obtained by applying a predetermined offset to the radio resources that were used in the time of initial transmission of the encoded bits, to the retransmission of the encoded bits. For example, in FIG. 3, a time duration to match one long TTI is configured as the predetermined offset. Thus, when the fifth and sixth symbols in long TTI #n are punctured, the encoded bits that are punctured in the fifth and sixth symbols in long TTI #n+1 are retransmitted.

Thus, in FIG. 3, encoded bits that are already received at the user terminal are not retransmitted, and only those encoded bits that are punctured are retransmitted, so that the efficiency of the use of radio resources can be improved. Also, in FIG. 3, non-adaptive retransmission is used, so that the burden of scheduling in the radio base station can be reduced.

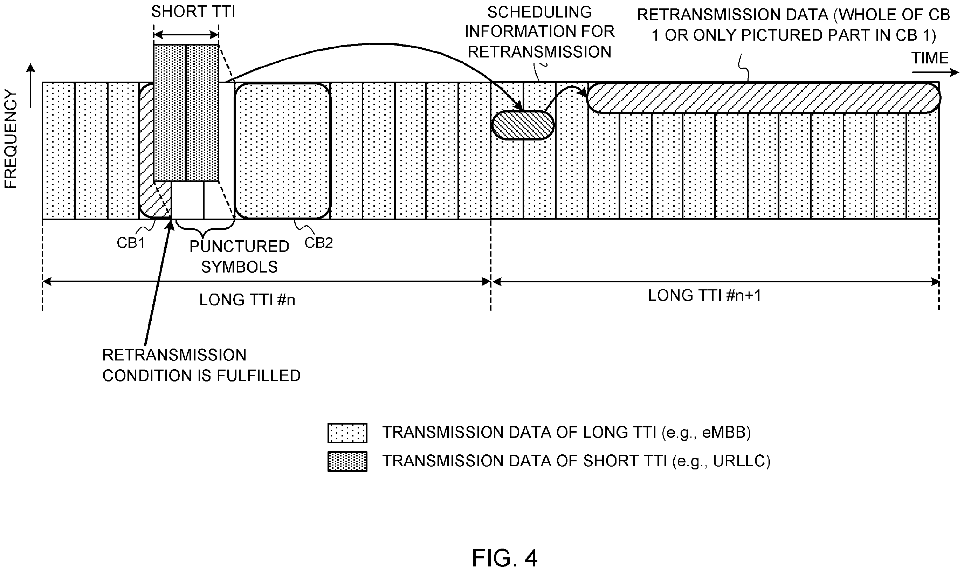

FIG. 4 is a diagram to show an example of adaptive retransmission in the first retransmission control. In FIG. 4, as in FIG. 2 and FIG. 3, part of CB 1 is punctured in long TTI #n. FIG. 4 differs from FIG. 2 and FIG. 3 in that adaptive retransmission is used instead of non-adaptive retransmission.

As shown in FIG. 4, in adaptive retransmission, the radio base station schedules retransmission whether the radio base station is retransmitting the whole of CB 1 or retransmitting the encoded bits that are mapped to punctured radio resources (here, two symbols). For example, in FIG. 4, the radio base station allocates the radio resources for retransmitting the whole of CB 1 or the above encoded bits in long TTI #n+1, to radio resources that are different from those of CB 1 in long TTI #n.

Also, as shown in FIG. 4, the radio base station transmits retransmission scheduling information (also referred to as "downlink control information (DCI)," "DL assignment," etc.) in a predetermined number of symbols in long TTI #n+1 (here, the first two symbols). The user terminal monitors (blind-decodes) a plurality of DL control channel candidates to detect the scheduling information, and receives the retransmission data based on this scheduling information.

Thus, in FIG. 4, adaptive retransmission is used, so that it is possible to allocate radio resources to retransmission data in a flexible manner.

### <Second Retransmission Control>

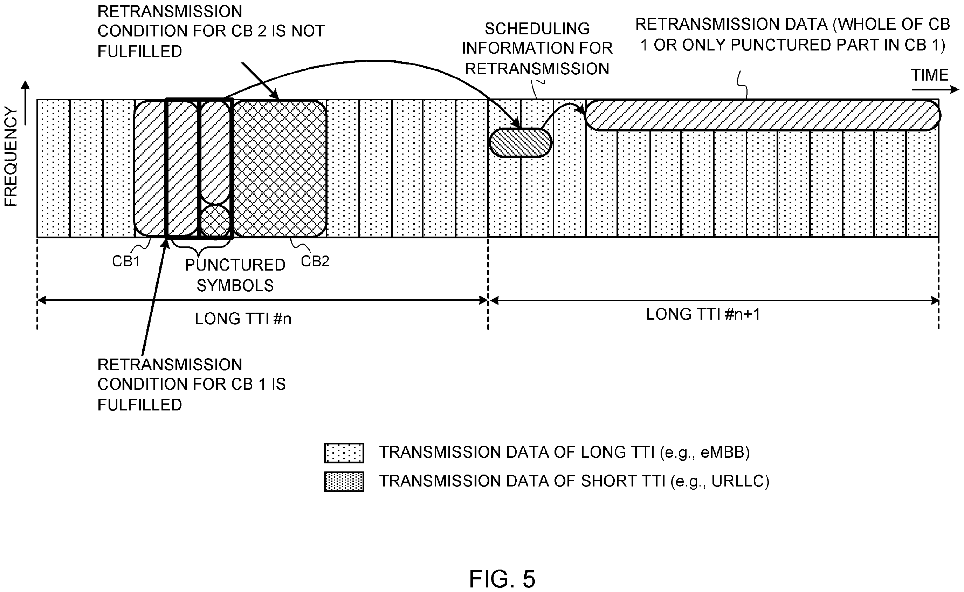

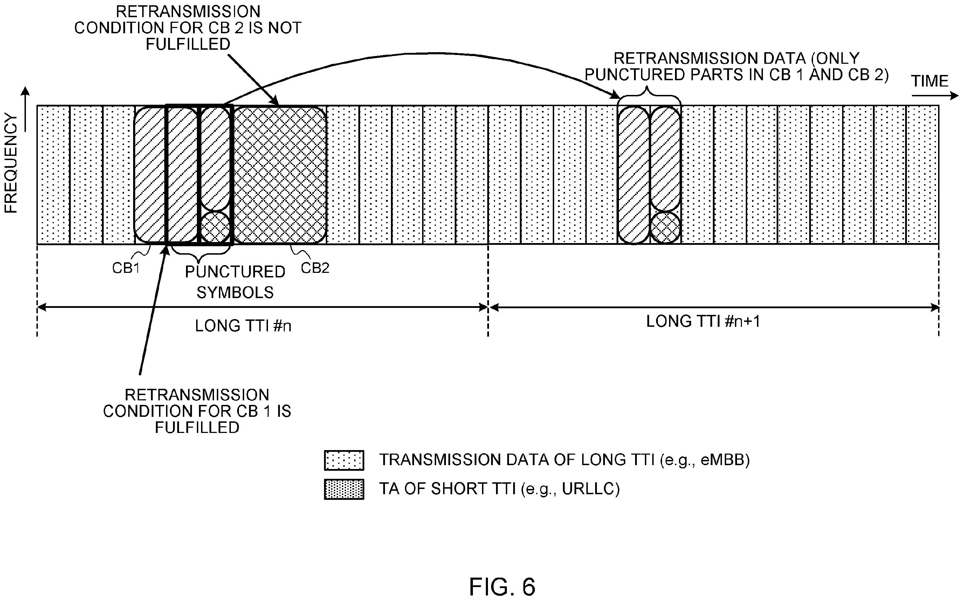

An example of second retransmission control in the radio base station will be described in detail with reference to FIG. 5 and FIG. 6. A case has been assumed with the above-described first retransmission control where encoded bits in a single CB are punctured by transmission data for a short TTI. By contrast with this, the second retransmission control will assume a case where encoded bits in a plurality of CBs are punctured by transmission data for a short TTI.

When transmission data for a short TTI punctures encoded bits in multiple CBs, retransmission may be performed only for those CBs that fulfill the condition for retransmission (FIG. 5). Alternatively, if at least one of these multiple CBs meets the condition for retransmission, retransmission may be performed for all of these multiple CBs (FIG. 6).

FIG. 5 is a diagram to show an example of adaptive retransmission in the second retransmission control. In FIG. 5, for example, suppose that data transmission in a short TTI punctures symbols where CB 1 is allocated and symbols where CB 1 and CB 2 are allocated.

As shown in FIG. 5, when encoded bits in CB 1 and CB 2 are punctured by data transmission in a short TTI, the radio base station decides, for each CB, whether or not to perform retransmission without feedback information from the user terminal, based on the above-noted retransmission conditions. Note that, in FIG. 5, the condition for retransmission for CB 1 is fulfilled, while the condition for retransmission for CB 2 is not fulfilled.

As shown in FIG. 5, when CB 1 alone fulfills the condition for retransmission, the radio base station may retransmit CB 1's retransmission data (the whole of CB 1, encoded bits of CB 1 that are punctured, etc.) in adaptive retransmission. Note that, although not illustrated, the radio base station may retransmit the retransmission of CB 1 by using non-adaptive retransmission as well.

In FIG. 5, when encoded bits are punctured in a plurality of CBs, retransmission is performed only for CBs where the condition for retransmission is fulfilled, so that the efficiency of the use of radio resources can be improved.

FIG. 6 is a diagram to show an example of non-adaptive retransmission in the second retransmission control. In FIG. 6, as in FIG. 5, assume that data transmission in a short TTI punctures symbols to which CB 1 is allocated and symbols to which CB 1 and CB 2 are allocated. Also in FIG. 6, assume that CB 1 meets the condition for retransmission but CB 2 does not meet the retransmission condition.

As shown in FIG. 6, when CB 1 alone fulfills the condition for retransmission, in addition to the retransmission data for CB 1 (encoded bits in CB 1 that are punctured), the radio base station may retransmit the retransmission data for CB 2 (encoded bits in CB 2 that are punctured), which does not fulfill the condition for retransmission, in non-adaptive retransmission. Note that, although not illustrated, the radio base station may retransmit the retransmission data for CB 1 and CB 2 by using non-adaptive retransmission. Also, the radio base station may retransmit the whole of CB 1 and CB 2.

In FIG. 6, when encoded bits are punctured in a plurality of CBs, retransmission is performed not only for CBs that fulfill the condition for retransmission, but also for CBs that do not fulfill the condition for retransmission, so that it is possible to reduce the possibility that error will remain, even after error correction decoding, in CBs where the conditions for retransmission are not fulfilled, and retransmission will be required.

### <Third Retransmission Control>

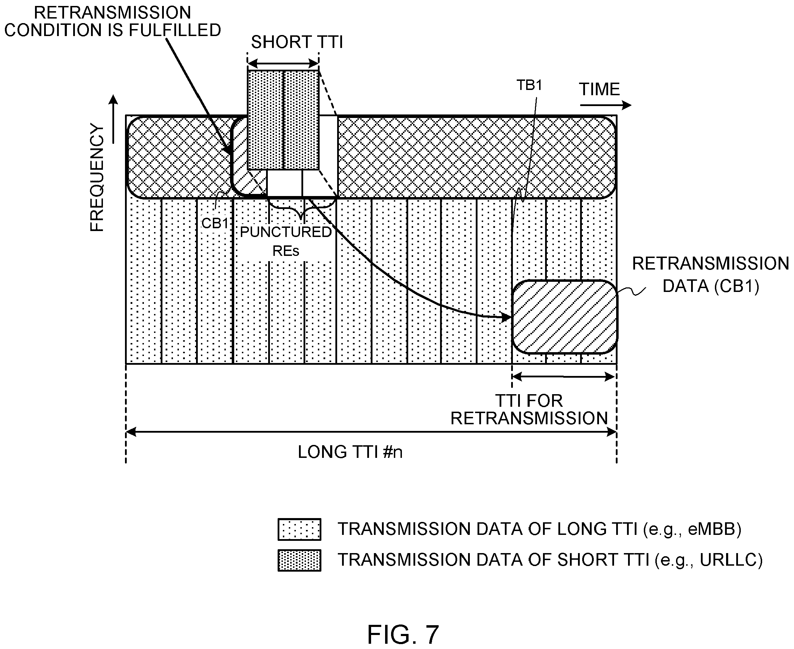

An example of third retransmission control in the radio base station will be described in detail with reference to FIG. 7 to FIG. 9. Cases have been described above with the first and second retransmission controls where the user terminal is capable only of monitoring either a long TTI or a short TTI in a given period. Now, the third retransmission control will assume a case where the user terminal is capable of monitoring a long TTI and a short TTI simultaneously. Note that the third retransmission control can be combined with the first and/or the second retransmission control.

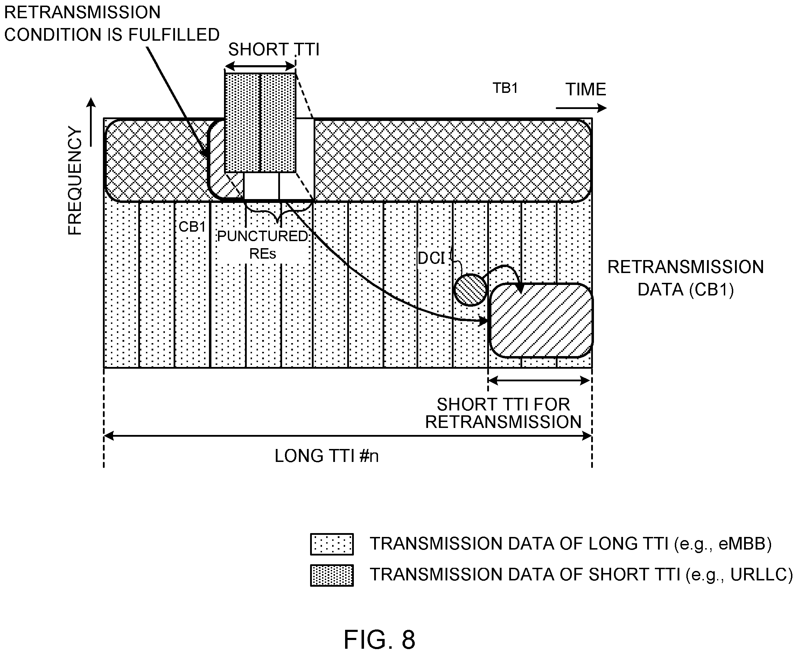

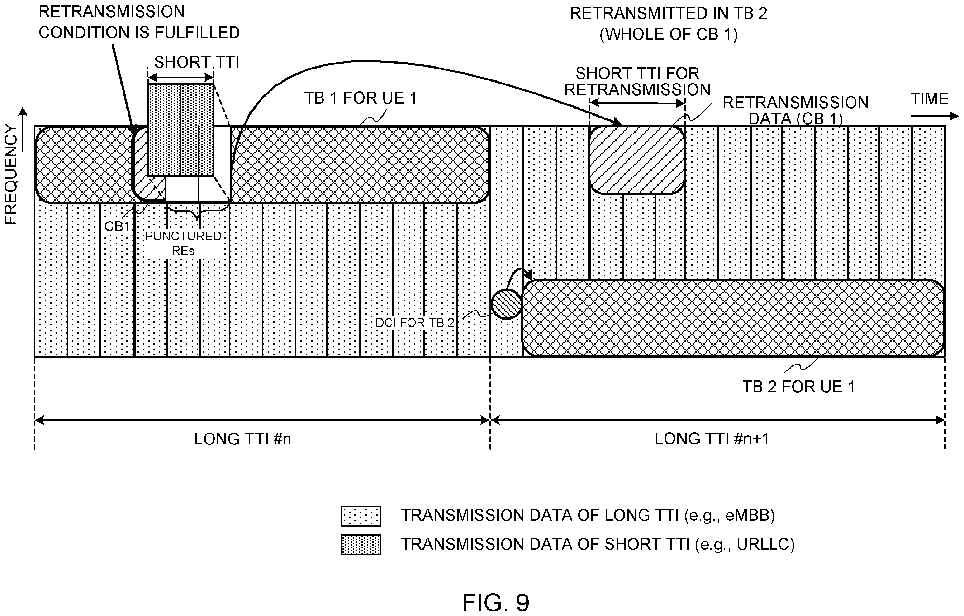

According to the third retransmission control, when puncturing by transmission data in a short TTI occurs in at least one CB in a long TTI, the radio base station may retransmit retransmission data within this long TTI (FIG. 7 and FIG. 8). Alternatively, the radio base station may transmit the retransmission data, with DL data that is transmitted initially, in the following long TTI (FIG. 9).

FIG. 7 is a diagram to show an example of non-adaptive retransmission in the third retransmission control. In FIG. 7, as in FIG. 2 and FIG. 3, part of CB 1 is punctured in long TTI #n. FIG. 7 is different from FIG. 2 and FIG. 3 in that the radio base station retransmits retransmission data in long TTI #n where puncturing has occurred, not in following long TTI #n+1.

As shown in FIG. 7, in the event the condition for retransmission is fulfilled in CB 1, the radio base station may transmit retransmission data for CB 1 in a short TTI that is placed at the end of long TTI #n. The location of this short TTI may be determined in advance (for example, the end of the long TTI).

For example, in FIG. 7, TB 2, where CB 1 that is punctured is included, is transmitted as retransmission data in a short TTI. Upon detecting that part of CB 1 is missing, the user terminal may monitor and detect the retransmission data that arrives in a predetermined short TTI for retransmission. The user terminal restores TB 1 from CB 1 received in the short TTI for retransmission and another CB received in the long TTI. Although, in FIG. 7, the whole of CB 1 is retransmitted, only the punctured encoded bits of CB 1 may be retransmitted.

In FIG. 7, retransmission data for the punctured CB is transmitted in long TTI #n where the puncturing has occurred, so that the user terminal can quickly restore TB1. In addition, the position to allow the short TTI for retransmission to cut in is determined in advance, so that the burden of scheduling can be reduced.

FIG. 8 is a diagram to show an example of adaptive retransmission in the third retransmission control. In FIG. 8, as in FIG. 7, the radio base station retransmits retransmission data for punctured CB 1 in long TTI #n, but FIG. 8 is different from FIG. 7 in retransmitting this retransmission data by using adaptive retransmission.

In FIG. 8, the user terminal may detect scheduling information for TB 1 in long TTI #n and scheduling information for retransmission data in a short TTI for retransmission, and decode other CBs in TB 1 and the retransmission data in the retransmission short TTI concurrently. In FIG. 8, the whole of CB 1 is retransmitted, but it is equally possible to retransmit only those encoded bits of CB 1 that are punctured.

In FIG. 8, the retransmission data for the punctured CB is retransmitted in long TTI #n where the puncturing has occurred, so that so that the user terminal can quickly restore TB1. Furthermore, since the position of the short TTI for retransmission can be changed in a flexible manner, the radio resources can be used effectively.

FIG. 9 is a diagram to show another example of non-adaptive retransmission in the third retransmission control. In FIG. 9, a short TTI for retransmission is embedded in following long TTI #n+1. In this case, the radio base station may transmit TB 2, which is transmitted for the first time, in long TTI #n+1.

Referring to FIG. 9, the user terminal can receive the retransmission data that is retransmitted in the short TTI for retransmission, along with the DL data that is transmitted for the first time, in long TTI #n+1.

As described above, according to the first aspect of the present invention, even if feedback information to acknowledge the delivery of DL data does not arrive from the user terminal, the radio base station transmits retransmission data, so that, even if a short TTI interrupts a long TTI, the deterioration of communication performance in the long TTI can be reduced.

### (Second Aspect)

In accordance with a second aspect of the present invention, a case will be described below in which, when a radio base station transmits retransmission data without delivery-acknowledging feedback information from a user terminal, the radio base station reports information related to this retransmission data to the user terminal. This reporting may be done in an implicit and/or an explicit manner.

### < Implicit Reporting>

In the event of implicit reporting, the user terminal receives information that shows the above-mentioned retransmission conditions (retransmission condition information), from the radio base station. The user terminal may receive this retransmission condition information via higher layer signaling and/or physical layer signaling. The user terminal, receiving DL data in a long TTI, understands that retransmission data for the DL data will be transmitted when the retransmission condition indicated by the retransmission condition information is fulfilled.

Also, the user terminal, upon receiving DL data in a long TTI, identifies which REs have been punctured by transmission in a short TTI, based on blind detection or a puncturing indicator contained in the DCI.

By using the above-described implicit reporting, even when puncturing by transmission in short TTIs occurs with an increased frequency, it is still possible to reduce the increase of overhead.

### <Explicit Reporting>

In the event of explicit reporting, the radio base station may signal information as to whether or not it is possible to transmit retransmission data without delivery-acknowledging feedback information from the user terminal.

Also, the radio base station may signal information that shows which CB's retransmission data is transmitted, to the user terminal. For example, when encoded bits are punctured in a plurality of CBs, the radio base station can signal information as to which CBs the retransmission data covers (FIG. 5).

Also, the radio base station may signal information related to the radio resources (for example, at least one of time resources, frequency resources, space resources and code resources) that are used to transmit the retransmission data, to the user terminal. For example, the radio base station may signal to the user terminal whether or not the above-described non-adaptive retransmission (or the above-described adaptive retransmission) is used. Also, the radio base station may signal the timing offset (for example, the number of long TTIs) to apply to the TTI where the retransmission data is transmitted, to the user terminal.

The radio base station may signal such retransmission-related information via higher layer signaling (for example, RRC or MAC CE) and/or DCI. Also, the radio base station may signal this retransmission-related information with a puncturing indicator. Alternatively, the radio base station may signal this retransmission-related information independently of the puncturing indicator, before or after puncturing occurs.

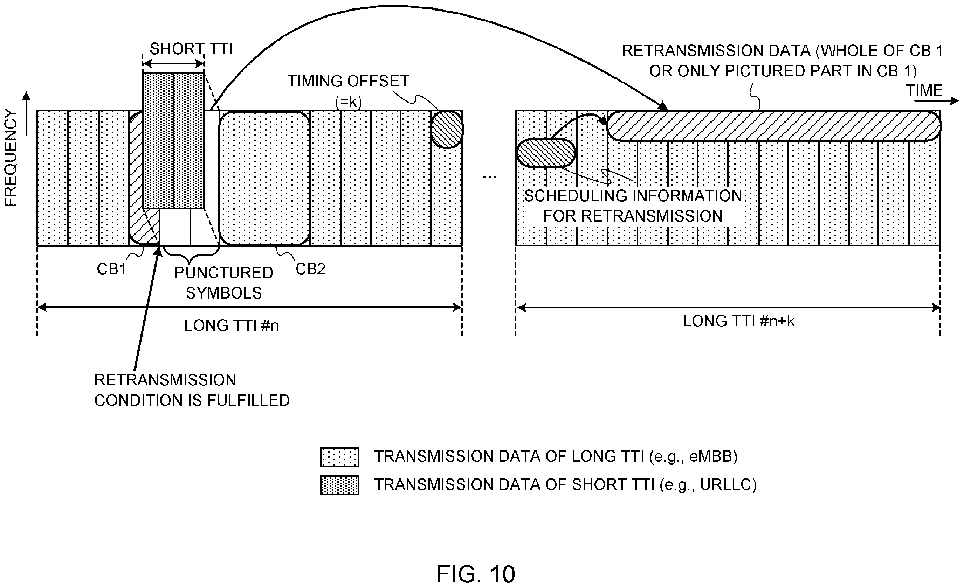

FIG. 10 is a diagram to show an example of reporting the timing for transmitting retransmission data according to the second aspect. As shown in FIG. 10, in the event part of CB 1 is punctured in long TTI #n, the radio base station may transmit a timing offset, which indicates the timing to transmit retransmission data, in long TTI #n.

In FIG. 10, the timing offset shows k, so that the user terminal may receive the retransmission data based on the retransmission scheduling information provided in long TTI #n+k. Note that, although, in FIG. 10, the timing offset is reported in the last symbol of long TTI #n, the timing offset may be reported in other symbols, or reported in a subsequent long TTI or short TTI.

Also, if DL data for multiple user terminals is punctured by transmission in a short TTI, the radio base station may signal information regarding the retransmission of the punctured DL data to the multiple user terminals together, or signal this information to each user terminal separately.

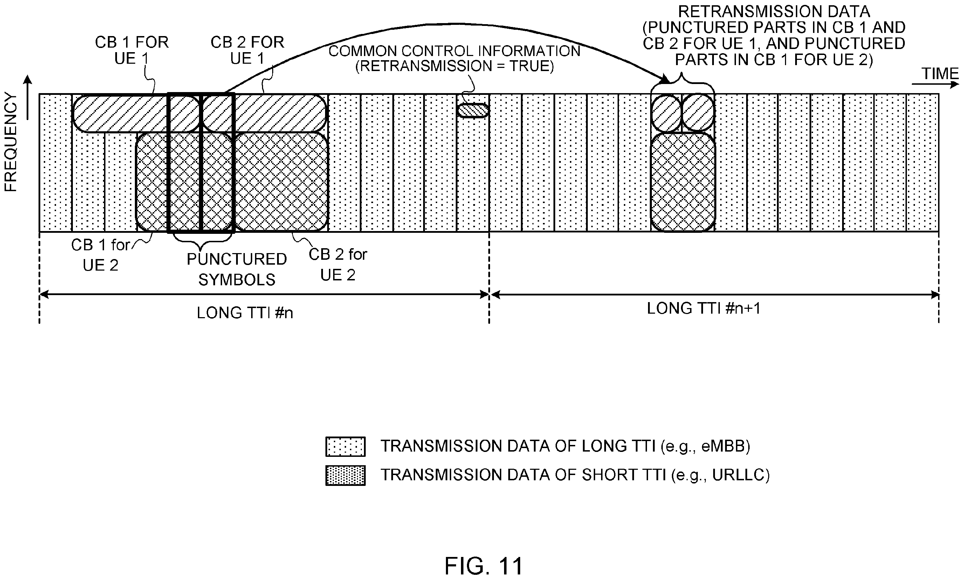

FIG. 11 is a diagram to show an example of a report that is common to a plurality of user terminals, according to the second aspect. In FIG. 11, in long TTI #n, part of CB 1 and CB 2 for user terminal 1 and part of CB 1 for user terminal 2 are punctured by transmission in a short TTI.

In FIG. 11, common control information, which is common to user terminal 1 and user terminal 2, reports that retransmission is possible. Therefore, as shown in FIG. 11, retransmission data including the encoded bits for user terminals 1 and 2 that are punctured in long TTI #n is transmitted, regardless of whether or not each CB fulfills the condition for retransmission. This common control information may indicate which CB's encoded bits are retransmitted. Note that, although FIG. 11 shows non-adaptive retransmission, retransmission data may as well be transmitted by using adaptive retransmission.

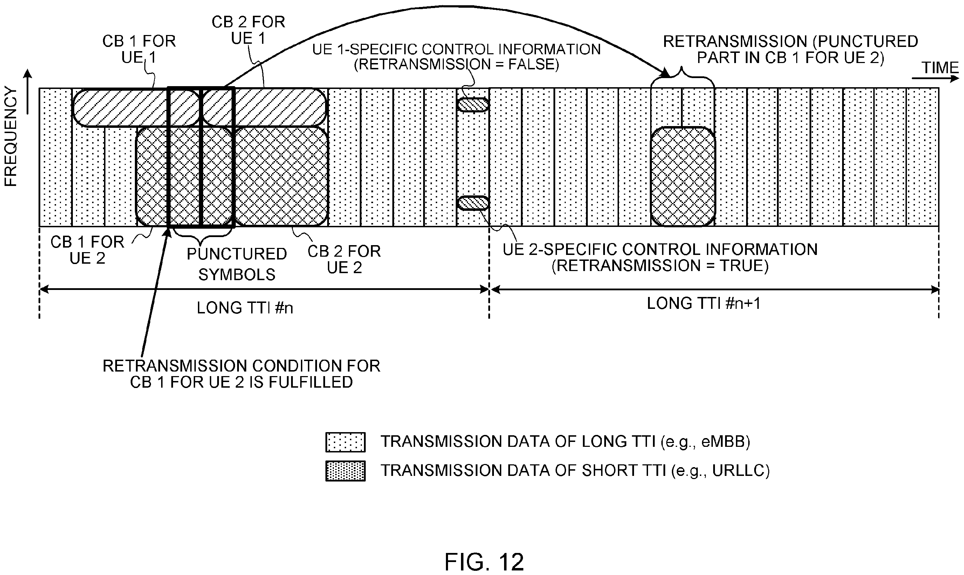

FIG. 12 is a diagram to show examples of reports that are specific to a plurality of user terminals, according to the second aspect. In FIG. 12, similar to FIG. 11, in long TTI #n, part of CB 1 and CB 2 for user terminal 1 and part of CB 1 for user terminal 2 are punctured by transmission in a short TTI.

In FIG. 12, whether or not retransmission is possible is reported by control information that is specific to each of user terminal 1 and user terminal 2. In FIG. 12, CB 1 for user terminal 2 fulfills the condition for retransmission, the control information that is specifically for user terminal 2 indicates that retransmission is possible. On the other hand, since CB 1 and CB 2 for user terminal 2 do not fulfill the condition for retransmission, the control information that is specifically for user terminal 1 indicates that retransmission is not possible. Note that, although FIG. 12 shows non-adaptive retransmission, retransmission data may as well be transmitted by using adaptive retransmission. Also, while part of CB 1 is retransmitted in FIG. 12, the whole of CB 1 can be retransmitted.

By using the above-described explicit reporting, the user terminal can identify the punctured radio resources and/or the radio resources where retransmission data is transmitted, so that the user terminal can easily restore TB based on CBs that are received, and retransmission data.

### (Third Aspect)

In accordance with a third aspect of the present invention, the operation of the user terminal when the radio base station transmits retransmission data without delivery-acknowledging feedback information from the user terminal will be described. As has been described with the second aspect, when information related to retransmissions is reported implicitly or explicitly, the user terminal waits to decode the entire TB, which includes punctured CBs, until the retransmission data is received, and the user terminal controls the retransmission of the whole TB (starts the HARQ process) after the retransmission data is received.

According to the third aspect, an ACK/NACK in response to the entire TB restored based on the retransmission data may be fed back a predetermined period of time later, with reference to the long TTI where the retransmission data is received. In the long TTI in which the retransmission data is received, the retransmission data alone may be received (first example), or DL data related to other HARQ processes may be received with the retransmission data (second example).

### <First Example>

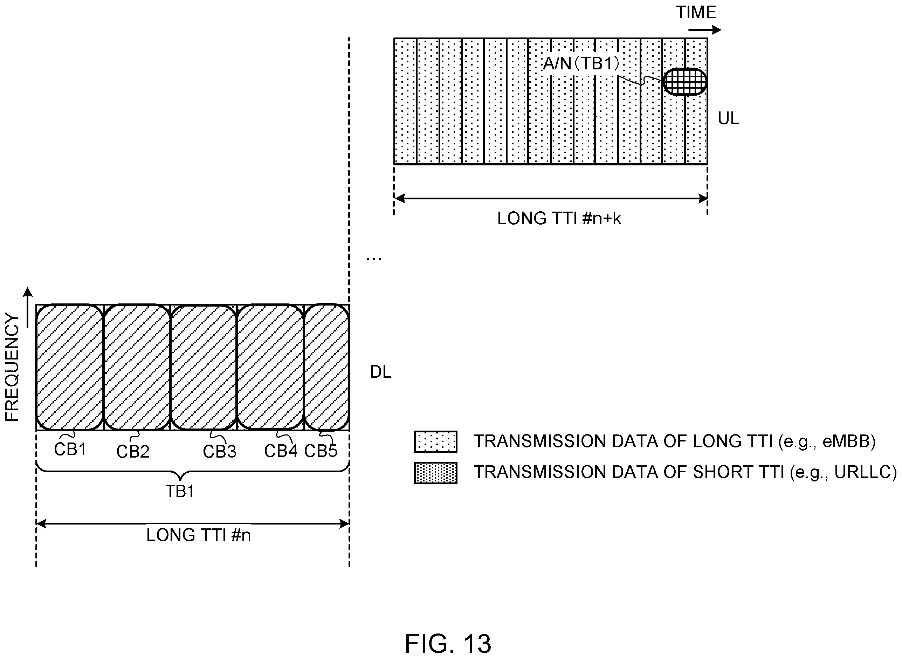

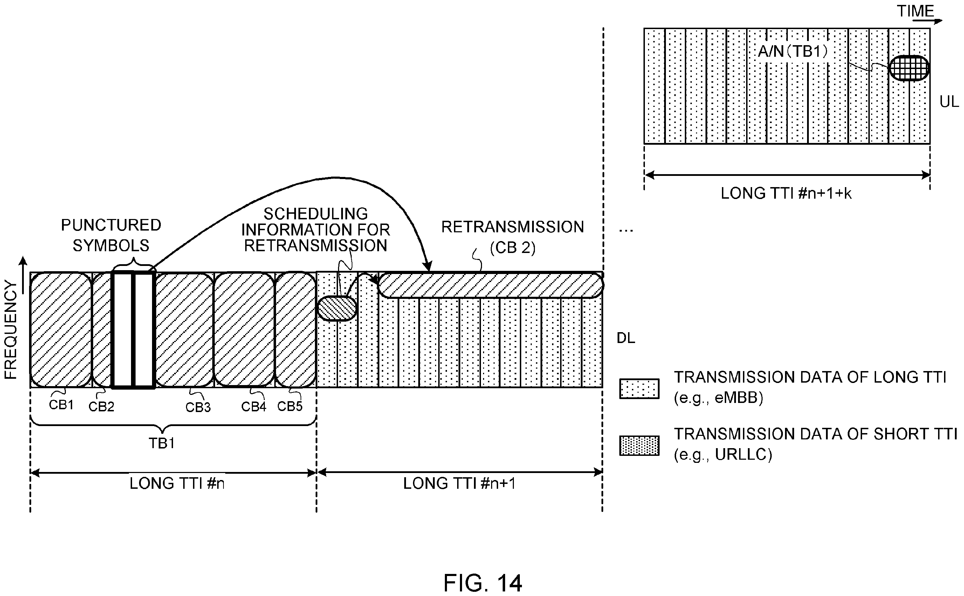

FIG. 13 and FIG. 14 are diagrams, each showing a first example of retransmission control by a user terminal according to the third aspect. In FIG. 13, TB 1 including CB 1 to CB 5 is transmitted, without puncturing, in long TTI #n. In the case illustrated in FIG. 13, the user terminal decodes TB 1 based on the decoding result of each CB, and feeds back an ACK/NACK in response to the entire TB 1 to the radio base station in long TTI #n+k.

By contrast with this, in FIG. 14, part of CB #2 is punctured in long TTI #n, and CB 2 is retransmitted in long TTI #n+1. In the case illustrated in FIG. 14, the user terminal restores TB 1 using CB 1 and CB3 to CB 5 transmitted in long TTI #n, and CB 2 retransmitted in long TTI #n+1. That is, the user terminal waits to restore TB 1 transmitted in long TTI #n until punctured CB 2 is retransmitted in long TTI #n+1.

In addition, in long TTI #n+1+k, which is a predetermined period of time (here, k long TTIs) after long TTI #n+1 in which CB 2 is retransmitted, the user terminal transmits an ACK/NACK in response to the whole of TB 1, which is restored based on retransmission data, to the radio base station.

### <Second Example>

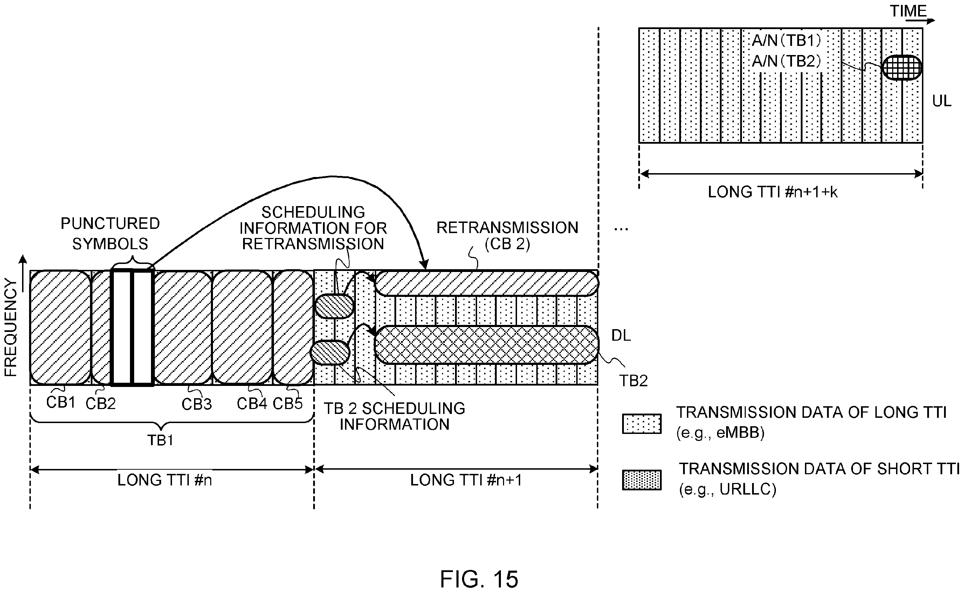

FIG. 15 is a diagram to show a second example of retransmission control by a user terminal according to the third aspect. In FIG. 15, part of CB #2 is punctured in long TTI #n, and CB 2 is retransmitted in long TTI #n+1. In long TTI #n+1, in addition to the retransmission data, TB 2 of a different HARQ process from TB 1 is transmitted.

In the case illustrated in FIG. 15, in long TTI #n+1+k, the user terminal may feed back an ACK/NACK in response to TB 2, which is transmitted for the first time in long TTI #n+1, in addition to an ACK/NACK in response to TB 1 that is restored by using CB 1 and CB 3 to CB 5 transmitted in long TTI #n and CB 2 retransmitted in long TTI #n+1.

For example, the feedback information in long TTI #n+1+k may include HARQ process numbers so that it is possible to identify which HARQ processes the ACKs/NACKs pertain to. Also, each DCI in long TTI #n+1 may include a feedback index that shows which TTI or CB and/or TB the ACK/NACK that is transmitted relates to. Also, the feedback information in long TTI #n+1+k may include a 1-bit indicator that shows whether the retransmission data and an ACK/NACK in response to TB 2 of a different HARQ process than the retransmission data are multiplexed, or whether only an ACK/NACK in response to TB 2 is included

Alternately, in long TTI #n+1+k, ACKs/NACKs in response to multiple different HARQ processes (TB) are fed back in a predetermined order, and the radio base station may implicitly identify which HARQ processes the ACKs/NACKs pertain to.

Also, although not illustrated, the user terminal may feed back either an ACK/NACK in response to TB 1 or an ACK/NACK in response to TB 2 in long TTI #n+1+k. For example, the ACK/NACK in response to TB 1 restored based on retransmission data may be fed back preferentially over the ACK/NACK in response to TB 2 that has been transmitted for the first time, or which ACK/NACK should be fed back may be indicated by the radio base station. In this case, the feedback delay for the other ACK/NACK may be fixed, or may be based on conditions such as whether a TTI is available, timeout, etc.

According to the third aspect, the user terminal waits to decode the whole of a TB that includes punctured CBs until retransmission data is received, and, after receiving the retransmission data, controls the retransmission of the whole TB (starts the HARQ process), so that the deterioration of system performance due to puncturing can be prevented.

### (Radio Communication System)

Now, the structure of a radio communication system according to the present embodiment will be described below. In this radio communication system, each radio communication method according to the above-described embodiments is employed. Note that the radio communication method according to each embodiment may be used alone or may be used in combination.

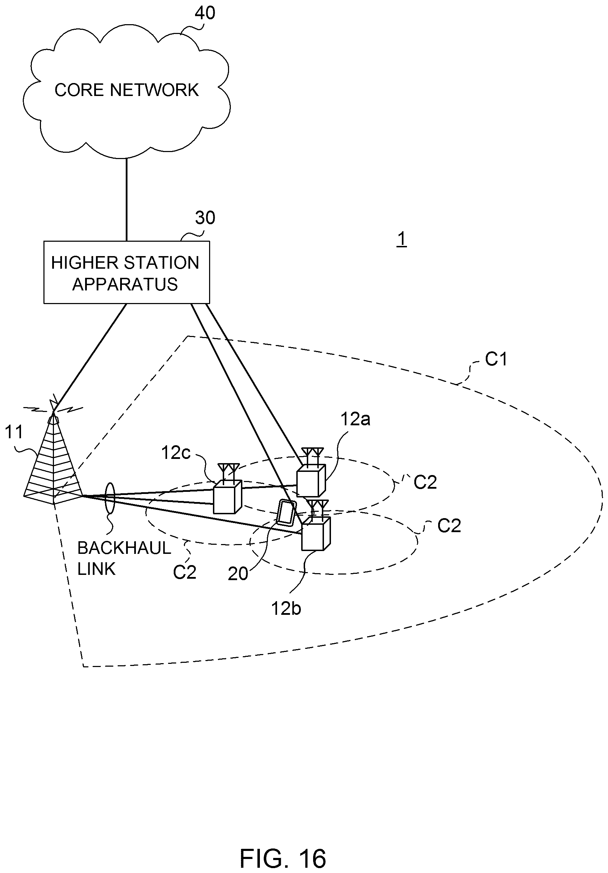

FIG. 16 is a diagram to show an example of a schematic structure of a radio communication system according to the present embodiment. A radio communication system 1 can adopt carrier aggregation (CA) and/or dual connectivity (DC) to group a plurality of fundamental frequency blocks (component carriers) into one, where the LTE system bandwidth (for example, 20 MHz) constitutes one unit. Note that the radio communication system 1 may be referred to as "SUPER 3G," "LTE-A (LTE-Advanced)," "IMT-Advanced," "4G," "5G," "FRA (Future Radio Access)," "NR (New RAT)" and so on.

The radio communication system 1 shown in FIG. 16 includes a radio base station 11 that forms a macro cell C1, and radio base stations 12a to 12c that are placed within the macro cell C1 and that form small cells C2, which are narrower than the macro cell C1. Also, user terminals 20 are placed in the macro cell C1 and in each small cell C2. A configuration in which different numerologies are applied between cells may be adopted. Note that a "numerology" refers to a set of communication parameters that characterize the design of signals in a given RAT and the design of the RAT.

The user terminals 20 can connect with both the radio base station 11 and the radio base stations 12. The user terminals 20 may use the macro cell C1 and the small cells C2, which use different frequencies, at the same time, by means of CA or DC. Also, the user terminals 20 can execute CA or DC by using a plurality of cells (CCs) (for example, two or more CCs). Furthermore, the user terminals can use license band CCs and unlicensed band CCs as a plurality of cells.

Furthermore, the user terminal 20 can perform communication using time division duplexing (TDD) or frequency division duplexing (FDD) in each cell. A TDD cell and an FDD cell may be referred to as a "TDD carrier (frame configuration type 2)," and an "FDD carrier (frame configuration type 1)," respectively.

Also, each cell (carrier) may use either long TTIs or short TTIs, or use both long TTIs and short TTIs.

Between the user terminals 20 and the radio base station 11, communication can be carried out using a carrier of a relatively low frequency band (for example, 2 GHz) and a narrow bandwidth (referred to as, for example, an "existing carrier," a "legacy carrier" and so on). Meanwhile, between the user terminals 20 and the radio base stations 12, a carrier of a relatively high frequency band (for example, 3.5 GHz, 5 GHz, 30 to 70 GHz and so on) and a wide bandwidth may be used, or the same carrier as that used in the radio base station 11 may be used. Note that the structure of the frequency band for use in each radio base station is by no means limited to these.

A structure may be employed here in which wire connection (for example, means in compliance with the CPRI (Common Public Radio Interface) such as optical fiber, the X2 interface and so on) or wireless connection is established between the radio base station 11 and the radio base station 12 (or between two radio base stations 12).

The radio base station 11 and the radio base stations 12 are each connected with higher station apparatus 30, and are connected with a core network 40 via the higher station apparatus 30. Note that the higher station apparatus 30 may be, for example, access gateway apparatus, a radio network controller (RNC), a mobility management entity (MME) and so on, but is by no means limited to these. Also, each radio base station 12 may be connected with the higher station apparatus 30 via the radio base station 11.

Note that the radio base station 11 is a radio base station having a relatively wide coverage, and may be referred to as a "macro base station," a "central node," an "eNB (eNodeB)," a "transmitting/receiving point" and so on. Also, the radio base stations 12 are radio base stations having local coverages, and may be referred to as "small base stations," "micro base stations," "pico base stations," "femto base stations," "HeNBs (Home eNodeBs)," "RRHs (Remote Radio Heads)," "transmitting/receiving points" and so on. Hereinafter the radio base stations 11 and 12 will be collectively referred to as "radio base stations 10," unless specified otherwise.

The user terminals 20 are terminals to support various communication schemes such as LTE, LTE-A and so on, and may be either mobile communication terminals or stationary communication terminals. Furthermore, the user terminals 20 can perform inter-terminal (D2D) communication with other user terminals 20.

In the radio communication system 1, as radio access schemes, OFDMA (orthogonal Frequency Division Multiple Access) can be applied to the downlink (DL), and SC-FDMA (Single-Carrier Frequency Division Multiple Access) can be applied to the uplink (UL). OFDMA is a multi-carrier communication scheme to perform communication by dividing a frequency bandwidth into a plurality of narrow frequency bandwidths (subcarriers) and mapping data to each subcarrier. SC-FDMA is a single-carrier communication scheme to mitigate interference between terminals by dividing the system bandwidth into bands formed with one or continuous resource blocks per terminal, and allowing a plurality of terminals to use mutually different bands. Note that the uplink and downlink radio access schemes are not limited to the combinations of these, and OFDMA may be used in UL.

In the radio communication system 1, DL data channel (PDSCH (Physical Downlink Shared CHannel), which is also referred to as, for example, a "DL shared channel"), which is used by each user terminal 20 on a shared basis, a broadcast channel (PBCH (Physical Broadcast CHannel)), L1/L2 control channels and so on, are used as DL channels. User data, higher layer control information and SIBs (System Information Blocks) are communicated in the PDSCH. Also, the MIB (Master Information Block) is communicated in the PBCH.

The L1/L2 control channels include DL control channels (a PDCCH (Physical Downlink Control CHannel), an EPDCCH (Enhanced Physical Downlink Control CHannel) and so on), a PCFICH (Physical Control Format Indicator CHannel), a PHICH (Physical Hybrid-ARQ Indicator CHannel) and so on. Downlink control information (DCI), including PDSCH and PUSCH scheduling information, is communicated by the PDCCH. The number of OFDM symbols to use for the PDCCH is communicated by the PCFICH. The EPDCCH is frequency-division-multiplexed with the PDSCH and used to communicate DCI and so on, like the PDCCH. It is possible to communicate HARQ re-transmission command information (ACK/NACK) in response to the PUSCH using at least one of the PHICH, the PDCCH and the EPDCCH.

In the radio communication system 1, UL data channel (PUSCH: Physical Uplink Shared CHannel, which is also referred to as "UL shared channel" and so on), which is used by each user terminal 20 on a shared basis, a UL control channel (PUCCH: Physical Uplink Control CHannel), a random access channel (PRACH: Physical Random Access CHannel) and so on are used as UL channels. User data, higher layer control information and so on are communicated by the PUSCH. Uplink control information (UCI), including at least one of retransmission command information (ACK/NACK), channel state information (CSI) and so on, is communicated in the PUSCH or the PUCCH. By means of the PRACH, random access preambles for establishing connections with cells are communicated.

### <Radio Base Station>

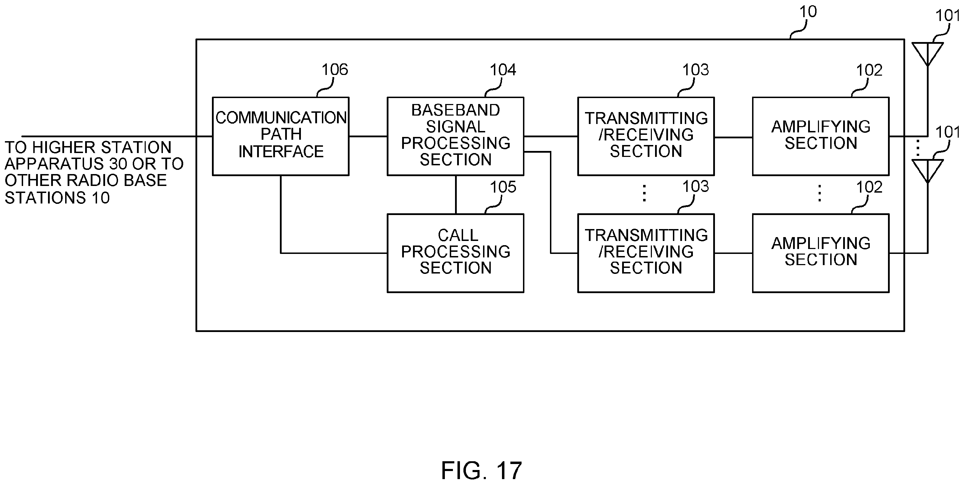

FIG. 17 is a diagram to show an example of an overall structure of a radio base station according to the present embodiment. A radio base station 10 has a plurality of transmitting/receiving antennas 101, amplifying sections 102, transmitting/receiving sections 103, a baseband signal processing section 104, a call processing section 105 and a communication path interface 106. Note that one or more transmitting/receiving antennas 101, amplifying sections 102 and transmitting/receiving sections 103 may be provided.

User data to be transmitted from the radio base station 10 to a user terminal 20 on the downlink is input from the higher station apparatus 30 to the baseband signal processing section 104, via the communication path interface 106.

In the baseband signal processing section 104, the user data is subjected to transmission processes, including a PDCP (Packet Data Convergence Protocol) layer process, division and coupling of the user data, RLC (Radio Link Control) layer transmission processes such as RLC retransmission control, MAC (Medium Access Control) retransmission control (for example, an HARQ (Hybrid Automatic Repeat reQuest) transmission process), scheduling, transport format selection, channel coding, an inverse fast Fourier transform (IFFT) process and a precoding process, and the result is forwarded to each transmitting/receiving sections 103. Furthermore, downlink control signals are also subjected to transmission processes such as channel coding and an inverse fast Fourier transform, and forwarded to the transmitting/receiving sections 103.

Baseband signals that are precoded and output from the baseband signal processing section 104 on a per antenna basis are converted into a radio frequency band in the transmitting/receiving sections 103, and then transmitted. The radio frequency signals having been subjected to frequency conversion in the transmitting/receiving sections 103 are amplified in the amplifying sections 102, and transmitted from the transmitting/receiving antennas 101.

The transmitting/receiving sections 103 can be constituted by transmitters/receivers, transmitting/receiving circuits or transmitting/receiving apparatus that can be described based on general understanding of the technical field to which the present invention pertains. Note that a transmitting/receiving section 103 may be structured as a transmitting/receiving section in one entity, or may be constituted by a transmitting section and a receiving section.

Meanwhile, as for UL signals, radio frequency signals that are received in the transmitting/receiving antennas 101 are each amplified in the amplifying sections 102. The transmitting/receiving sections 103 receive the UL signals amplified in the amplifying sections 102. The received signals are converted into the baseband signal through frequency conversion in the transmitting/receiving sections 103 and output to the baseband signal processing section 104.

In the baseband signal processing section 104, UL data that is included in the UL signals that are input is subjected to a fast Fourier transform (FFT) process, an inverse discrete Fourier transform (IDFT) process, error correction decoding, a MAC retransmission control receiving process, and RLC layer and PDCP layer receiving processes, and forwarded to the higher station apparatus 30 via the communication path interface 106. The call processing section 105 performs call processing (such as setting up and releasing communication channels), manages the state of the radio base stations 10 and manages the radio resources.

The communication path interface section 106 transmits and receives signals to and from the higher station apparatus 30 via a predetermined interface. Also, the communication path interface 106 may transmit and/or receive signals (backhaul signaling) with neighboring radio base stations 10 via an inter-base station interface (for example, an interface in compliance with the CPRI (Common Public Radio Interface), such as optical fiber, the X2 interface, etc.).

In addition, the transmitting/receiving sections 103 transmit DL signals (for example, scheduling information, DL data, and information related to retransmission (retransmission data), etc.), and receive UL signal (for example, UL data, feedback information, etc.) in a long TTI (first TTI) and/or in a short TTI (second TTI).

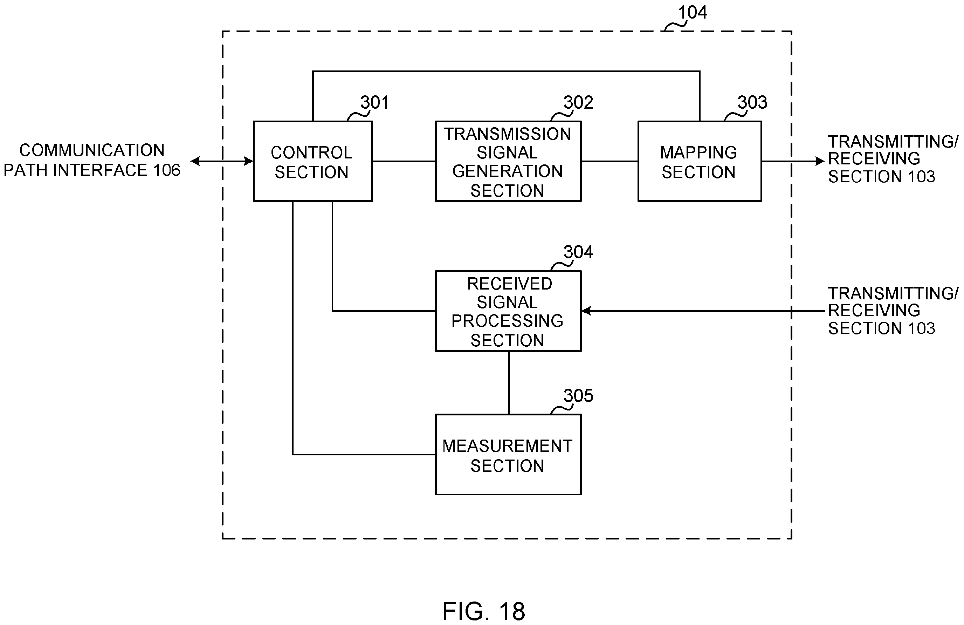

FIG. 18 is a diagram to show an example of a functional structure of a radio base station according to the present embodiment. Note that, although FIG. 18 primarily shows functional blocks that pertain to characteristic parts of the present embodiment, the radio base station 10 has other functional blocks that are necessary for radio communication as well. As shown in FIG. 18, the baseband signal processing section 104 has a control section 301, a transmission signal generation section 302, a mapping section 303, a received signal processing section 304 and a measurement section 305.

The control section 301 controls the whole of the radio base station 10. The control section 301 controls, for example, the generation of DL signals by the transmission signal generation section 302, the mapping of DL signals by the mapping section 303, the receiving processes (for example, demodulation) for UL signals by the received signal processing section 304 and the measurements by the measurement section 305.

In particular, the control section 301 schedules long TTIs and/or short TTIs. The control section 301 may control the transmission process (for example, encoding, modulation, transmission, etc.) of scheduling information using a scheduling control channel in long TTIs and/or short TTIs.

Also, the control section 301 controls the transmission of DL signals and/or receipt of UL signals in long TTIs and/or short TTIs. To be more specific, the control section 301 may control the DL data transmission process (for example, encoding, modulation, mapping, transmission, etc.) and/or the UL data receiving process (for example, receipt, demapping, demodulation, decoding, etc.) in long TTIs and/or short TTIs.

Furthermore, the control section 301 controls the transmission of retransmission data of DL data. To be more specific, when part of the DL data in a long TTI is punctured by transmission in a short TTI, the control section 301 may control the transmission of retransmission data without delivery-acknowledging feedback information (ACK/NACK) from the user terminal 20 (see the first aspect and the first to third retransmission controls).

The DL data is constituted by transport blocks including one or more code blocks, and, when at least a part of the code blocks constituting the DL data is punctured, the retransmission data may include all of the code blocks or the punctured portion.

To be more specific, when the condition for retransmission (criterion) is fulfilled, the control section 301 may perform control so that the retransmission data is transmitted without the above feedback information. In addition, the control section 301 may perform control so that the retransmission data is transmitted by non-adaptive retransmission or adaptive retransmission.

In addition, the control section 301 may perform control so that information related to the retransmission without feedback information is reported to the user terminal 20 (second embodiment).

The control section 301 can be constituted by a controller, a control circuit or control apparatus that can be described based on general understanding of the technical field to which the present invention pertains.

The transmission signal generation section 302 generates DL signals (including DL data, scheduling information, first and second reference signals, etc.) based on commands from the control section 301, and outputs these to the mapping section 303.

For the transmission signal generation section 302, a signal generator, a signal generation circuit or signal generation apparatus that can be described based on general understanding of the technical field to which the present invention pertains can be used.

The mapping section 303 maps the DL signals generated in the transmission signal generation section 302 to predetermined radio resources based on commands from the control section 301, and outputs these to the transmitting/receiving sections 103. For the mapping section 303, mapper, a mapping circuit or mapping apparatus that can be described based on general understanding of the technical field to which the present invention pertains can be used.

The received signal processing section 304 performs the receiving process (for example, demapping, demodulation, decoding and so on) of uplink signals that are transmitted from the user terminals 20. To be more specific, the received signal processing section 304 demodulates UL data for long TTIs using the first reference signal. In addition, the received signal processing section 304 may demodulate UL data for short TTIs using the first reference signal and/or the second reference signal.

To be more specific, the received signal processing section 304 may output the received signals, the signals after the receiving process and so on, to the measurement section 305. The measurement section 305 conducts measurements with respect to the received signals. The measurement section 305 can be constituted by a measurer, a measurement circuit or measurement apparatus that can be described based on general understanding of the technical field to which the present invention pertains.

The measurement section 305 may measure the received power (for example, the RSRP (Reference Signal Received Power)), the received quality (for example, RSRQ (Reference Signal Received Quality)), channel states and so on of the received signals. The measurement results may be output to the control section 301.

### <User terminal>

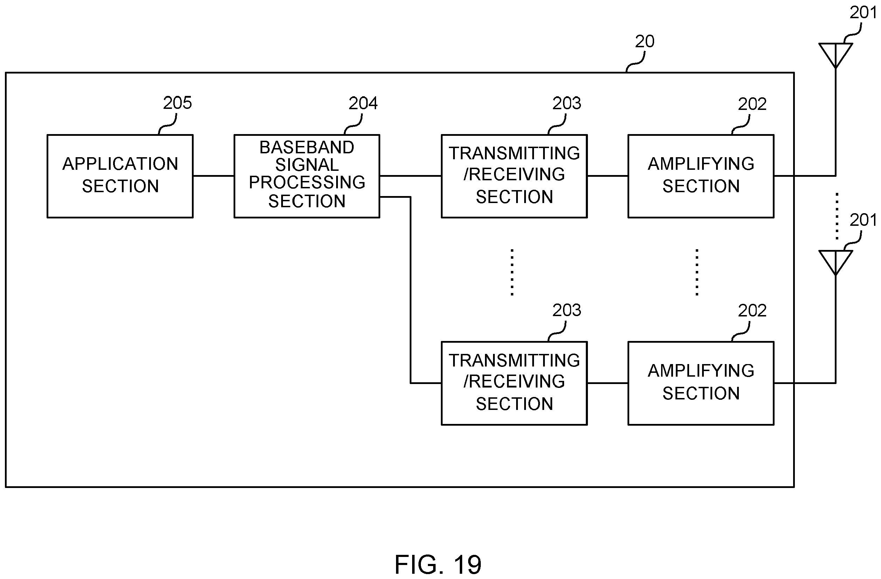

FIG. 19 is a diagram to show an example of an overall structure of a user terminal according to the present embodiment. A user terminal 20 has a plurality of transmitting/receiving antennas 201 for MIMO communication, amplifying sections 202, transmitting/receiving sections 203, a baseband signal processing section 204 and an application section 205.

Radio frequency signals that are received in a plurality of transmitting/receiving antennas 201 are each amplified in the amplifying sections 202. Each transmitting/receiving section 203 receives the DL signals amplified in the amplifying sections 202. The received signals are subjected to frequency conversion and converted into the baseband signal in the transmitting/receiving sections 203, and output to the baseband signal processing section 204.

In the baseband signal processing section 204, the baseband signal that is input is subjected to an FFT process, error correction decoding, a retransmission control receiving process, and so on. The DL data is forwarded to the application section 205. The application section 205 performs processes related to higher layers above the physical layer and the MAC layer, and so on. Furthermore, in the downlink data, broadcast information is also forwarded to the application section 205.

Meanwhile, the UL data is input from the application section 205 to the baseband signal processing section 204. The baseband signal processing section 204 performs a retransmission control transmission process (for example, an HARQ transmission process), channel coding, rate matching, puncturing, a discrete Fourier transform (DFT) process, an IFFT process and so on, and the result is forwarded to each transmitting/receiving section 203. UCI (for example, DL retransmission control information, channel state information, and so on) is also subjected to channel coding, rate matching, puncturing, DFT process, IFFT process and so on, and forwarded to each transmitting/receiving section 203.

Baseband signals that are output from the baseband signal processing section 204 are converted into a radio frequency band in the transmitting/receiving sections 203 and transmitted. The radio frequency signals that are subjected to frequency conversion in the transmitting/receiving sections 203 are amplified in the amplifying sections 202, and transmitted from the transmitting/receiving antennas 201.

Also, the transmitting/receiving sections 203 receive DL signals (for example, scheduling information, DL data, information related to retransmission (retransmission data), etc.) in long TTIs (first TTIs) and/or short TTIs (second TTIs). In addition, the transmitting/receiving section 203 transmit UL signals (for example, UL data, feedback information, etc.) in long TTIs and/or short TTIs.

For the transmitting/receiving sections 203, transmitters/receivers, transmitting/receiving circuits or transmitting/receiving apparatus that can be described based on general understanding of the technical field to which the present invention pertains can be used. Furthermore, a transmitting/receiving section 203 may be structured as one transmitting/receiving section, or may be formed with a transmitting section and a receiving section.

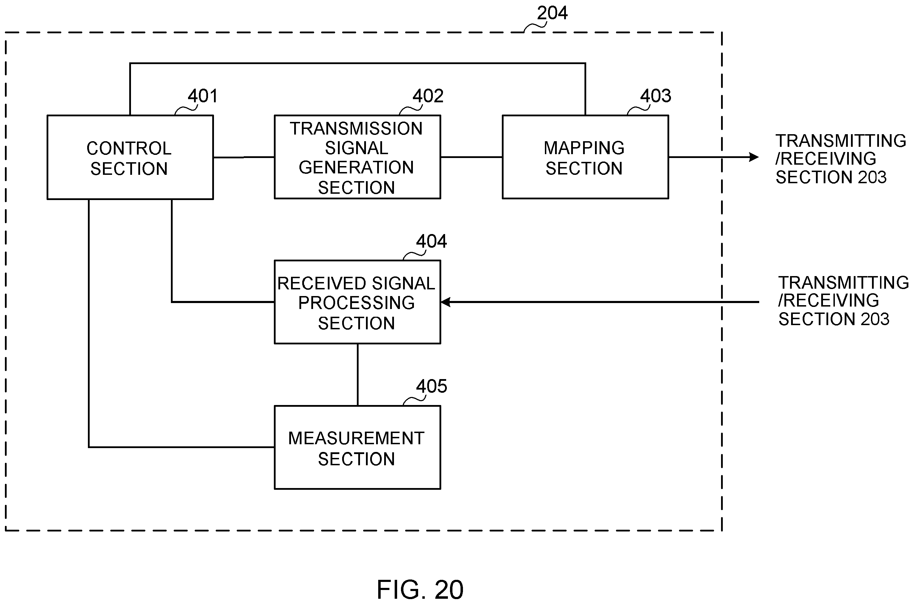

FIG. 20 is a diagram to show an example of a functional structure of a user terminal according to the present embodiment. Note that, although FIG. 20 primarily shows functional blocks that pertain to characteristic parts of the present embodiment, the user terminal 20 has other functional blocks that are necessary for radio communication as well. As shown in FIG. 20, the baseband signal processing section 204 provided in the user terminal 20 has a control section 401, a transmission signal generation section 402, a mapping section 403, a received signal processing section 404 and a measurement section 405.

The control section 401 controls the whole of the user terminal 20. The control section 401 controls, for example, the generation of UL signals in the transmission signal generation section 402, the mapping of UL signals in the mapping section 403, the UL signal receiving processes in the received signal processing section 404, the measurements in the measurement section 405 and so on.

To be more specific, the control section 401 may monitor (blind-decode) DL control channels in long TTIs and/or short TTIs, and detect long TTI and/or short TTI scheduling information pertaining to the user terminal 20.

In addition, the control section 401 controls the receipt of DL signals and/or the transmission of UL signals in long TTIs and/or short TTIs. To be more specific, the control section 401 may control the DL data receiving process (for example, receipt, demapping, demodulation, decoding, etc.) and/or the UL data transmission process (for example, encoding, modulation, mapping, transmission, etc.) in long TTIs and/or short TTIs.

Furthermore, the control section 401 controls the recovery of DL data. To be more specific, when part of the DL data in a long TTI is punctured by transmission in a short TTI, the control section 401 may control the recovery of the DL data based on retransmission data that is transmitted without delivery-acknowledging feedback information (ACK/NACK) from the user terminal 20 (see the first and third aspects).

The DL data is constituted by transport blocks including one or more code blocks, and, when at least part of the code blocks constituting the DL data is punctured, the retransmission data may include all of the code blocks or the punctured portion.

Furthermore, the control section 401 may control the recovery of DL data using retransmission data, based on information related to the retransmission data, from the radio base station 10. Also, the control section 401 may control the transmission of feedback information for acknowledging the delivery of DL data, based on information related to retransmission data. In addition, the control section 401 may control the transmission of feedback information after a predetermined period of time from the receipt of the retransmission data (see FIG. 13 to FIG. 15).

For the control section 401, a controller, a control circuit or control apparatus that can be described based on general understanding of the technical field to which the present invention pertains can be used.

The transmission signal generation section 402 generates UL signals (including, for example, encoding, rate matching, puncturing, modulation, etc.) based on commands from the control section 401, and outputs these signals to the mapping section 403. For the transmission signal generation section 402, a signal generator, a signal generation circuit or signal generation apparatus that can be described based on general understanding of the technical field to which the present invention pertains can be used.

The mapping section 403 maps the UL signals generated in the transmission signal generation section 402 to radio resources based on commands from the control section 401, and output the result to the transmitting/receiving sections 203. For the mapping section 403, a mapper, a mapping circuit or mapping apparatus that can be described based on general understanding of the technical field to which the present invention pertains can be used.

The received signal processing section 404 performs the receiving process (for example, demapping, demodulation, decoding, etc.) of DL signals (DL data, scheduling information, etc.). The received signal processing section 404 outputs the information received from the radio base station 10, to the control section 401. The received signal processing section 404 outputs, for example, broadcast information, system information, high layer control information that is provided via higher layer signaling such as RRC signaling, L1/L2 control information (for example, scheduling information) and so on, to the control section 401.

The received signal processing section 404 can be constituted by a signal processor, a signal processing circuit or signal processing apparatus that can be described based on general understanding of the technical field to which the present invention pertains. Also, the received signal processing section 404 can constitute the receiving section according to the present invention.

The measurement section 405 measures channel states based on reference signals (for example, CSI-RS) from the radio base station 10, and outputs the measurement results to the control section 401. Note that the channel state measurements may be conducted per CC. Measurement section 405 may also perform channel estimation using the first and second reference signals and output the estimated results to the control section 401.

The measurement section 405 can be constituted by a signal processor, a signal processing circuit or signal processing apparatus, and a measurer, a measurement circuit or measurement apparatus that can be described based on general understanding of the technical field to which the present invention pertains.

### <Hardware Structure>

Note that the block diagrams that have been used to describe the above embodiments show blocks in functional units. These functional blocks (components) may be implemented in arbitrary combinations of hardware and/or software. Also, the means for implementing each functional block is not particularly limited. That is, each functional block may be realized by one piece of apparatus that is physically and/or logically aggregated, or may be realized by directly and/or indirectly connecting two or more physically and/or logically separate pieces of apparatus (via wire or wireless, for example) and using these multiple pieces of apparatus.

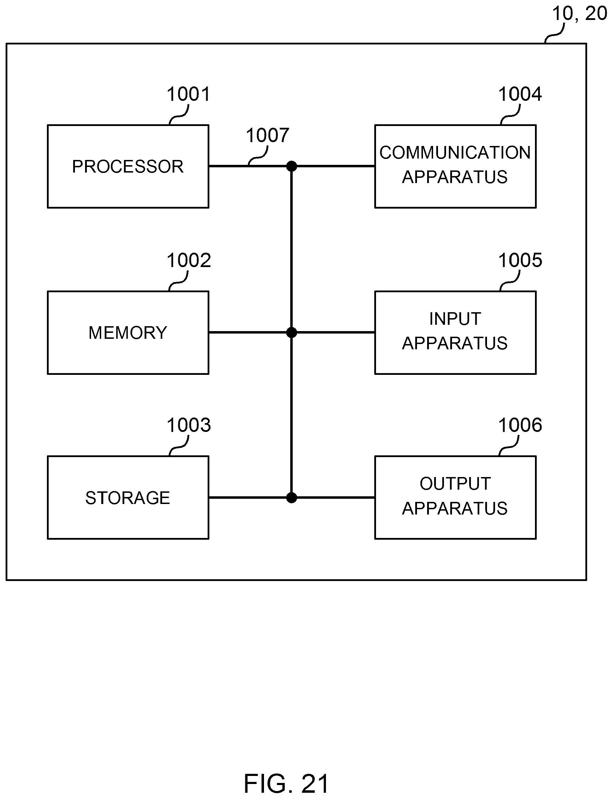

That is, a radio base station, a user terminal and so on according to one embodiment of the present invention may function as a computer that executes the processes of the radio communication method of the present invention. FIG. 21 is a diagram to show an example hardware structure of a radio base station and a user terminal according to an embodiment of the present invention. Physically, the above-described radio base stations 10 and user terminals 20 may be formed as a computer apparatus that includes a processor 1001, a memory 1002, a storage 1003, communication apparatus 1004, input apparatus 1005, output apparatus 1006 and a bus 1007.

Note that, in the following description, the word "apparatus" may be replaced by "circuit," "device," "unit" and so on. Note that the hardware structure of a radio base station 10 and a user terminal 20 may be designed to include one or more of each apparatus shown in the drawings, or may be designed not to include part of the apparatus.

For example, although only one processor 1001 is shown, a plurality of processors may be provided. Furthermore, processes may be implemented with one processor, or processes may be implemented in sequence, or in different manners, on two or more processors. Note that the processor 1001 may be implemented with one or more chips.

Each function of the radio base station 10 and the user terminal 20 is implemented by reading predetermined software (program) on hardware such as the processor 1001 and the memory 1002, and by controlling the calculations in the processor 1001, the communication in the communication apparatus 1004, and the reading and/or writing of data in the memory 1002 and the storage 1003.

The processor 1001 may control the whole computer by, for example, running an operating system. The processor 1001 may be configured with a central processing unit (CPU), which includes interfaces with peripheral apparatus, control apparatus, computing apparatus, a register and so on. For example, the above-described baseband signal processing section 104 (204), call processing section 105 and so on may be implemented by the processor 1001.

Furthermore, the processor 1001 reads programs (program codes), software modules or data, from the storage 1003 and/or the communication apparatus 1004, into the memory 1002, and executes various processes according to these. As for the programs, programs to allow computers to execute at least part of the operations of the above-described embodiments may be used. For example, the control section 401 of the user terminals 20 may be implemented by control programs that are stored in the memory 1002 and that operate on the processor 1001, and other functional blocks may be implemented likewise.

The memory 1002 is a computer-readable recording medium, and may be constituted by, for example, at least one of a ROM (Read Only Memory), an EPROM (Erasable Programmable ROM), an EEPROM (Electrically EPROM), a RAM (Random Access Memory) and/or other appropriate storage media. The memory 1002 may be referred to as a "register," a "cache," a "main memory (primary storage apparatus)" and so on. The memory 1002 can store executable programs (program codes), software modules and the like for implementing the radio communication methods according to one embodiment of the present invention.

The storage 1003 is a computer-readable recording medium, and may be constituted by, for example, at least one of a flexible disk, a floppy (registered trademark) disk, a magneto-optical disk (for example, a compact disc (CD-ROM (Compact Disc ROM) and so on), a digital versatile disc, a Blu-ray (registered trademark) disk), a removable disk, a hard disk drive, a smart card, a flash memory device (for example, a card, a stick, a key drive, etc.), a magnetic stripe, a database, a server, and/or other appropriate storage media. The storage 1003 may be referred to as "secondary storage apparatus."

The communication apparatus 1004 is hardware (transmitting/receiving device) for allowing inter-computer communication by using wired and/or wireless networks, and may be referred to as, for example, a "network device," a "network controller," a "network card," a "communication module" and so on. The communication apparatus 1004 may be configured to include a high frequency switch, a duplexer, a filter, a frequency synthesizer and so on in order to realize, for example, frequency division duplex (FDD) and/or time division duplex (TDD). For example, the above-described transmitting/receiving antennas 101 (201), amplifying sections 102 (202), transmitting/receiving sections 103 (203), communication path interface 106 and so on may be implemented by the communication apparatus 1004.

The input apparatus 1005 is an input device for receiving input from the outside (for example, a keyboard, a mouse, a microphone, a switch, a button, a sensor and so on). The output apparatus 1006 is an output device for allowing sending output to the outside (for example, a display, a speaker, an LED (Light Emitting Diode) lamp and so on). Note that the input apparatus 1005 and the output apparatus 1006 may be provided in an integrated structure (for example, a touch panel).

Furthermore, these pieces of apparatus, including the processor 1001, the memory 1002 and so on are connected by the bus 1007 so as to communicate information. The bus 1007 may be formed with a single bus, or may be formed with buses that vary between pieces of apparatus.

Also, the radio base station 10 and the user terminal 20 may be structured to include hardware such as a microprocessor, a digital signal processor (DSP), an ASIC (Application-Specific Integrated Circuit), a PLD (Programmable Logic Device), an FPGA (Field Programmable Gate Array) and so on, and part or all of the functional blocks may be implemented by the hardware. For example, the processor 1001 may be implemented with at least one of these pieces of hardware.

### (Variations)

Note that the terminology used in this specification and the terminology that is needed to understand this specification may be replaced by other terms that convey the same or similar meanings. For example, "channels" and/or "symbols" may be replaced by "signals (or "signaling")." Also, "signals" may be "messages." A reference signal may be abbreviated as an "RS," and may be referred to as a "pilot," a "pilot signal" and so on, depending on which standard applies. Furthermore, a "component carrier (CC)" may be referred to as a "cell," a "frequency carrier," a "carrier frequency" and so on.

Furthermore, a radio frame may be comprised of one or more periods (frames) in the time domain. Each of one or more periods (frames) constituting a radio frame may be referred to as a "subframe." Furthermore, a subframe may be comprised of one or more slots in the time domain. A subframe may be a fixed time duration (for example, 1 ms) not dependent on the numerology.

Furthermore, a slot may be comprised of one or more symbols in the time domain (OFDM (Orthogonal Frequency Division Multiplexing) symbols, SC-FDMA (Single Carrier Frequency Division Multiple Access) symbols, and so on). Also, a slot may be a time unit based on numerology. Also, a slot may include a plurality of mini-slots. Each mini-slot may consist of one or more symbols in the time domain. Also, a mini-slot may be referred to as a "subslot."

A radio frame, a subframe, a slot, a mini-slot and a symbol all represent the time unit in signal communication. A radio frame, a subframe, a slot, a mini-slot and a symbol may be each called by other applicable names. For example, one subframe may be referred to as a "transmission time interval (TTI)," or a plurality of consecutive subframes may be referred to as a "TTI," or one slot or mini-slot may be referred to as a "TTI." That is, a subframe and/or a TTI may be a subframe (one ms) in existing LTE, may be a shorter period than one ms (for example, one to thirteen symbols), or may be a longer period of time than one ms. Note that the unit to represent the TTI may be referred to as a "slot," a "mini slot" and so on, instead of a "subframe."

Here, a TTI refers to the minimum time unit of scheduling in radio communication, for example. For example, in LTE systems, a radio base station schedules the radio resources (such as the frequency bandwidth and transmission power that can be used in each user terminal) to allocate to each user terminal in TTI units. Note that the definition of TTIs is not limited to this.

The TTI may be the transmission time unit of channel-encoded data packets (transport blocks), code blocks and/or codewords, or may be the unit of processing in scheduling, link adaptation and so on. Note that when a TTI is given, the period of time (for example, the number of symbols) in which transport blocks, code blocks and/or codewords are actually mapped may be shorter than the TTI.

Note that, when one slot or one mini-slot is referred to as a "TTI," one or more TTIs (that is, one or more slots or one or more mini-slots) may be the minimum time unit of scheduling. Also, the number of slots (the number of mini-slots) to constitute this minimum time unit of scheduling may be controlled.

A TTI having a time duration of one ms may be referred to as a "normal TTI (TTI in LTE Rel. 8 to 12)," a "long TTI," a "normal subframe," a "long subframe," and so on. A TTI that is shorter than a normal TTI may be referred to as a "shortened TTI," a "short TTI," "a partial TTI (or a "fractional TTI"), a "shortened subframe," a "short subframe," a "mini-slot," "a sub-slot" and so on.

Note that a long TTI (for example, a normal TTI, a subframe, etc.) may be replaced with a TTI having a time duration exceeding one ms, and a short TTI (for example, a shortened TTI) may be replaced with a TTI having a TTI length less than the TTI length of a long TTI and not less than one ms.

A resource block (RB) is the unit of resource allocation in the time domain and the frequency domain, and may include one or a plurality of consecutive subcarriers in the frequency domain. Also, an RB may include one or more symbols in the time domain, and may be one slot, one mini-slot, one subframe or one TTI in length. One TTI and one subframe each may be comprised of one or more resource blocks. Note that one or more RBs may be referred to as a "physical resource block (PRB: Physical RB)," a "subcarrier group (SCG: Sub-Carrier Group)," a "resource element group (REG)," a "PRB pair," an "RB pair" and so on.

Furthermore, a resource block may be comprised of one or more resource elements (REs). For example, one RE may be a radio resource field of one subcarrier and one symbol.

Note that the structures of radio frames, subframes, slots, mini-slots, symbols and so on described above are merely examples. For example, configurations pertaining to the number of subframes included in a radio frame, the number of slots included in a subframe, the number of mini-slots included in a slot, the number of symbols and RBs included in a slot or a mini-slot, the number of subcarriers included in an RB, the number of symbols in a TTI, the symbol duration, the length of cyclic prefixes (CPs) and so on can be variously changed.

Also, the information and parameters described in this specification may be represented in absolute values or in relative values with respect to predetermined values, or may be represented in other information formats. For example, radio resources may be specified by predetermined indices. In addition, equations to use these parameters and so on may be used, apart from those explicitly disclosed in this specification.

The names used for parameters and so on in this specification are in no respect limiting. For example, since various channels (PUCCH (Physical Uplink Control Channel), PDCCH (Physical Downlink Control Channel) and so on) and information elements can be identified by any suitable names, the various names assigned to these individual channels and information elements are in no respect limiting.

The information, signals and/or others described in this specification may be represented by using a variety of different technologies. For example, data, instructions, commands, information, signals, bits, symbols and chips, all of which may be referenced throughout the herein-included description, may be represented by voltages, currents, electromagnetic waves, magnetic fields or particles, optical fields or photons, or any combination of these.

Also, information, signals and so on can be output from higher layers to lower layers and/or from lower layers to higher layers. Information, signals and so on may be input and output via a plurality of network nodes.

The information, signals and so on that are input may be transmitted to other pieces of apparatus. The information, signals and so on to be input and/or output can be overwritten, updated or appended. The information, signals and so on that are output may be deleted. The information, signals and so on that are input may be transmitted to other pieces of apparatus.

Reporting of information is by no means limited to the examples/embodiments described in this specification, and other methods may be used as well. For example, reporting of information may be implemented by using physical layer signaling (for example, downlink control information (DCI), uplink control information (UCI), higher layer signaling (for example, RRC (Radio Resource Control) signaling, broadcast information (the master information block (MIB), system information blocks (SIBs) and so on), MAC (Medium Access Control) signaling and so on), and other signals and/or combinations of these.

Note that physical layer signaling may be referred to as "L1/L2 (Layer 1/Layer 2) control information (L1/L2 control signals)," "L1 control information (L1 control signal) "and so on. Also, RRC signaling may be referred to as "RRC messages," and can be, for example, an RRC connection setup message, RRC connection reconfiguration message, and so on. Also, MAC signaling may be reported using, for example, MAC control elements (MAC CEs (Control Elements)).

Also, reporting of predetermined information (for example, reporting of information to the effect that "X holds") does not necessarily have to be sent explicitly, and can be sent implicitly (by, for example, not reporting this piece of information).

Decisions may be made in values represented by one bit (0 or 1), may be made in Boolean values that represent true or false, or may be made by comparing numerical values (for example, comparison against a predetermined value).

Software, whether referred to as "software," "firmware," "middleware," "microcode" or "hardware description language," or called by other names, should be interpreted broadly, to mean instructions, instruction sets, code, code segments, program codes, programs, subprograms, software modules, applications, software applications, software packages, routines, subroutines, objects, executable files, execution threads, procedures, functions and so on.

Also, software, commands, information and so on may be transmitted and received via communication media. For example, when software is transmitted from a website, a server or other remote sources by using wired technologies (coaxial cables, optical fiber cables, twisted-pair cables, digital subscriber lines (DSL) and so on) and/or wireless technologies (infrared radiation, microwaves and so on), these wired technologies and/or wireless technologies are also included in the definition of communication media.

The terms "system" and "network" as used herein are used interchangeably.

As used herein, the terms "base station (BS)," "radio base station," "eNB," "cell," "sector," "cell group," "carrier," and "component carrier" may be used interchangeably. A base station may be referred to as a "fixed station," "NodeB," "eNodeB (eNB)," "access point," "transmission point," "receiving point," "femto cell," "small cell" and so on.

A base station can accommodate one or more (for example, three) cells (also referred to as "sectors"). When a base station accommodates a plurality of cells, the entire coverage area of the base station can be partitioned into multiple smaller areas, and each smaller area can provide communication services through base station subsystems (for example, indoor small base stations (RRHs: Remote Radio Heads)). The term "cell" or "sector" refers to part or all of the coverage area of a base station and/or a base station subsystem that provides communication services within this coverage.

As used herein, the terms "mobile station (MS)" "user terminal," "user equipment (UE)" and "terminal" may be used interchangeably. A base station may be referred to as a "fixed station," "NodeB," "eNodeB (eNB)," "access point," "transmission point," "receiving point," "femto cell," "small cell" and so on.

A mobile station may be referred to, by a person skilled in the art, as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client" or some other suitable terms.

Furthermore, the radio base stations in this specification may be interpreted as user terminals. For example, each aspect/embodiment of the present invention may be applied to a configuration in which communication between a radio base station and a user terminal is replaced with communication among a plurality of user terminals (D2D: Device-to-Device). In this case, user terminals 20 may have the functions of the radio base stations 10 described above. In addition, terms such as "uplink" and "downlink" may be interpreted as "side." For example, an uplink channel may be interpreted as a side channel.

Likewise, the user terminals in this specification may be interpreted as radio base stations. In this case, the radio base stations 10 may have the functions of the user terminals 20 described above.

Certain actions which have been described in this specification to be performed by base station may, in some cases, be performed by upper nodes. In a network comprised of one or more network nodes with base stations, it is clear that various operations that are performed to communicate with terminals can be performed by base stations, one or more network nodes (for example, MMEs (Mobility Management Entities), S-GW (Serving-Gateways), and so on may be possible, but these are not limiting) other than base stations, or combinations of these.

The examples/embodiments illustrated in this specification may be used individually or in combinations, which may be switched depending on the mode of implementation. The order of processes, sequences, flowcharts and so on that have been used to describe the aspects/embodiments herein may be re-ordered as long as inconsistencies do not arise. For example, although various methods have been illustrated in this specification with various components of steps in exemplary orders, the specific orders that are illustrated herein are by no means limiting.

The aspects/embodiments illustrated in this specification may be applied to LTE (Long Term Evolution), LTE-A (LTE-Advanced), LTE-B (LTE-Beyond), SUPER 3G, IMT-Advanced, 4G (4th generation mobile communication system), 5G (5th generation mobile communication system), FRA (Future Radio Access), New-RAT (Radio Access Technology), NR(New Radio), NX (New radio access), FX (Future generation radio access), GSM (registered trademark) (Global System for Mobile communications), CDMA 2000, UMB (Ultra Mobile Broadband), IEEE 802.11 (Wi-Fi (registered trademark)), IEEE 802.16 (WiMAX (registered trademark)), IEEE 802.20, UWB (Ultra-WideBand), Bluetooth (registered trademark), systems that use other adequate systems and/or next-generation systems that are enhanced based on these.

The phrase "based on" as used in this specification does not mean "based only on," unless otherwise specified. In other words, the phrase "based on" means both "based only on" and "based at least on."

Reference to elements with designations such as "first," "second" and so on as used herein does not generally limit the number/quantity or order of these elements. These designations are used only for convenience, as a method for distinguishing between two or more elements. Thus, reference to the first and second elements does not imply that only two elements may be employed, or that the first element must precede the second element in some way.

The terms "judge" and "determine" as used herein may encompass a wide variety of actions. For example, to "judge" and "determine" as used herein may be interpreted to mean making judgements and determinations related to calculating, computing, processing, deriving, investigating, looking up (for example, searching a table, a database or some other data structure, ascertaining and so on. Furthermore, to "judge" and "determine" as used herein may be interpreted to mean making judgements and determinations related to receiving (for example, receiving information), transmitting (for example, transmitting information), inputting, outputting, accessing (for example, accessing data in a memory) and so on. In addition, to "judge" and "determine" as used herein may be interpreted to mean making judgements and determinations related to resolving, selecting, choosing, establishing, comparing and so on. In other words, to "judge" and "determine" as used herein may be interpreted to mean making judgements and determinations related to some action.

As used herein, the terms "connected" and "coupled," or any variation of these terms, mean all direct or indirect connections or coupling between two or more elements, and may include the presence of one or more intermediate elements between two elements that are "connected" or "coupled" to each other. The coupling or connection between the elements may be physical, logical or a combination thereof. For example, "connection" may be interpreted as "access." As used herein, two elements may be considered "connected" or "coupled" to each other by using one or more electrical wires, cables and/or printed electrical connections, and, as a number of non-limiting and non-inclusive examples, by using electromagnetic energy, such as electromagnetic energy having wavelengths in the radio frequency, microwave and optical regions (both visible and invisible).

When terms such as "include," "comprise" and variations of these are used in this specification or in claims, these terms are intended to be inclusive, in a manner similar to the way the term "provide" is used. Furthermore, the term "or" as used in this specification or in claims is intended to be not an exclusive disjunction.

Now, although the present invention has been described in detail above, it should be obvious to a person skilled in the art that the present invention is by no means limited to the embodiments described herein. The present invention can be implemented with various corrections and in various modifications, without departing from the spirit and scope of the present invention defined by the recitations of claims. Consequently, the description herein is provided only for the purpose of explaining examples, and should by no means be construed to limit the present invention in any way.

The disclosure of Japanese Patent Application No. 2017-001441, filed on January 6, 2017, including the specification, drawings and abstract, is incorporated herein by reference in its entirety.

## Claims

1. A user terminal comprising:
a receiving section that receives downlink (DL) data in a first transmission time interval (TTI); and
a control section that, when part of the DL data is punctured by transmission in a second TTI, which is shorter than the first TTI, controls recovery of the DL data based on retransmission data transmitted from a radio base station, without feedback information for acknowledging delivery of the DL data.

2. The user terminal according to claim 1, wherein:
the DL data is constituted by transport blocks that including one or more code blocks; and
when at least part of the code blocks constituting the DL data is punctured, the retransmission data includes all of the code blocks or the punctured portion.

3. The user terminal according to claim 1 or claim 2, wherein the retransmission data is transmitted from the radio base station non-adaptively or adaptively.

4. The user terminal according to one of claim 1 to claim 3, wherein:
the receiving section receives information related to the retransmission data from the radio base station; and
the control section controls transmission of the feedback information for acknowledging the delivery of the DL data based on the information related to the retransmission data.

5. The user terminal according to claim 4, wherein the control section controls the transmission of the feedback information a predetermined period of time from after the receipt of the retransmission data.

6. A radio communication method comprising, in a user terminal, the steps of:
receiving downlink (DL) data in a first transmission time interval (TTI); and
when part of the DL data is punctured by transmission in a second TTI, which is shorter than the first TTI, controlling recovery of the DL data based on retransmission data transmitted from a radio base station, without feedback information for acknowledging delivery of the DL data.
